# EUROPÄISCHE PATENTSCHRIFT

(11) **EP 4 709 170 B1**
(45) Veröffentlichungstag und Bekanntmachung des Hinweises auf die Patenterteilung: **09.12.2026**
(21) Anmeldenummer: 24733495.6
(22) Anmeldetag: 08.05.2024
(51) Int. Cl.: A21C 15/00, A21D 13/32, A47F 1/06, A47J 27/14, A47J 44/00, G07F 17/00

(54) **VEREINZELUNGSVORRICHTUNG ZUR VEREINZELTEN AUSGABE EINES SCHEIBENFÖRMIGEN LEBENSMITTELPRODUKTS**
SEPARATION DEVICE FOR SEPARATED DISPENSING OF A SLICED FOOD PRODUCT
DISPOSITIF DE SÉPARATION POUR DISTRIBUER INDIVIDUELLEMENT UN PRODUIT ALIMENTAIRE SE PRÉSENTANT SOUS FORME DE TRANCHES

(30) Priorität: 09.05.2023 AT 503572023
(43) Veröffentlichungstag der Anmeldung: 18.03.2026
(73) Patentinhaber: Reet Systems GmbH, 1100 Wien (AT)
(72) Erfinder: SPRANZ, Dieter, 2522 Oberwaltersdorf (AT)
(74) Vertreter: Wildhack & Jellinek Patentanwälte GmbH
(86) Internationale Anmeldenummer: PCT/AT2024/060200
(87) Internationale Veröffentlichungsnummer: WO 2024/229499

(56) Entgegenhaltungen:
- CN-A- 112 155 450
- CN-A- 113 875 791
- GB-A- 1 482 031

## Beschreibung

Die Erfindung betrifft eine Vereinzelungsvorrichtung zur vereinzelten Ausgabe eines scheibenförmigen Lebensmittelprodukts gemäß Patentanspruch 1, ein Verfahren gemäß Patenanspruch 15, sowie eine Anlage zur Zubereitung von assemblierten Lebensmitteln gemäß Patentanspruch 16.

Unzählige Pizzen, Sandwiches, Tacos oder dergleichen werden täglich insbesondere in Schnellrestaurants zusammengestellt. Die Kunden legen dabei besonderen Wert auf gleichbleibende Produktqualität und rasche und hygienische Herstellung der bestellten Gerichte. In diesem Zusammenhang ist es wünschenswert, dass möglichst viele Herstellungsschritte automatisiert und ohne menschliches Zutun ablaufen, sodass Fehler wie das Vergessen bestimmter Zutaten bzw. Beläge bei der Herstellung der bestellten Gerichte zuverlässig vermieden werden können. Insbesondere Gemüse-Garnierungen wie Tomatenscheiben sind jedoch bisher schwierig automatisiert auf die Gerichte aufzubringen, da diese empfindlich in der Handhabung sind und bei unsachgemäßer Behandlung leicht Saft oder Kerne verlieren und dadurch auf dem Gericht unappetitlich aussehen und zu Verschmutzung der Produktionsstätte führen können.

Aus der EP 3504976 A1 ist eine Vorrichtung zur Abgabe von verschiedenen Garnierungen auf Sandwiches oder dergleichen bekannt. Dabei werden die verschiedenen Garnierungen Gurken, Tomaten, Zwiebel oder dergleichen - jeweils im Ganzen, d.h. in einem Stück - in Behälter eingebracht, die über einem Förderband angeordnet sind, auf dem das zu belegende Sandwich transportiert wird. Unter jedem Behälter ist eine Klinge angeordnet, die die Garnierungen in Scheiben schneidet, die anschließend auf die vorbeitransportierten Sandwiches fallen. Die Behälter mit den Garnierungen sind vertikal angeordnet, sodass bedingt durch die Wirkung der Schwerkraft die Garnierungen in Richtung der Klinge nachrutschen sollen.

Nachteilig bei dieser bekannten Vorrichtung ist jedoch, dass die Gemüsestücke sich in den Behältern leicht verkeilen können, da die Schwerkraftwirkung kein zuverlässiges Nachrutschen gewährleistet, empfindliche Gemüsesorten wie Tomaten beim Stapeln in den Behältern sowie beim Schneiden durch die Klinge gequetscht werden können und etwaiger entstehender Gemüsesaft auf das darunterliegende Förderband sowie die vorbeitransportierten Gerichte tropft. Weiters können bei einem Bruch oder Absplittern der Klinge scharfe Metallstücke auf das zusammengestellte Produkt bzw. Gericht gelangen und sich Mitarbeiter schwer verletzen, was ein erhebliches Sicherheitsrisiko darstellt. Aus der CN113875791A ist eine Vereinzelungsvorrichtung mit einer Führungsstruktur und einem Speicherzylinder bekannt, wodurch Teigkuchen übereinandergestapelt werden können.

Aufgabe der Erfindung ist es daher, diesbezüglich Abhilfe zu schaffen und eine Vorrichtung zur vereinzelten Ausgabe eines Lebensmittelprodukts bereitzustellen, die für die automatisierte Ausgabe empfindlicher Lebensmittelprodukte wie Tomaten geeignet ist, Sauberkeit und eine hygienische und sichere Herstellung sowie gleichbleibende Qualität der hergestellten Gerichte gewährleistet.

Die Erfindung löst diese Aufgabe mit einer Vereinzelungsvorrichtung zur vereinzelten Abgabe eines scheibenförmigen Lebensmittelprodukts mit den kennzeichnenden Merkmalen von Patentanspruch 1.

Erfindungsgemäß ist dabei vorgesehen, dass die Vereinzelungsvorrichtung folgende Komponenten umfasst:
- eine Trägereinheit mit einer Mehrzahl von Etagen zur Aufnahme der einzelnen Lebensmittelprodukte, wobei die Etagen parallel zueinander ausgerichtet sind und jeweils einen Produktträger umfassen, auf den die einzelnen Lebensmittelprodukte jeweils auflegbar sind,
- einen Aufnahmebehälter zur Aufnahme und Führung der Trägereinheit, wobei die Trägereinheit in einer Ausgangsposition, insbesondere vollständig, im Aufnahmebehälter aufgenommen ist,
- eine Transportvorrichtung, die mit der Trägereinheit und/oder dem Aufnahmebehälter koppelbar ist und dazu ausgebildet ist, die Trägereinheit linear schrittweise aus ihrer Ausgangsposition aus dem Aufnahmebehälter zu transportieren, sodass schrittweise jeweils eine Etage der Trägereinheit aus dem Aufnahmebehälter transportierbar ist,
   und
- eine Ausstoßvorrichtung, die linear relativ zur Trägereinheit und parallel zur Ebene der Produktträger aus einer Grundposition, in der sich die Ausstoßvorrichtung außerhalb der Trägereinheit befindet, in eine Ausstoßposition, in der die Ausstoßvorrichtung außerhalb und/oder innerhalb des Aufnahmebehälters zumindest teilweise zwischen die Produktträger der Trägereinheit eingebracht ist, reversibel verstellbar ist, sodass derart auf den Produktträgern aufgelegte Lebensmittelprodukte durch die Ausstoßvorrichtung einzeln aus der Trägereinheit beförderbar sind,
wobei die Transportvorrichtung dazu ausgebildet ist, jeweils eine Etage der Trägereinheit aus dem Aufnahmebehälter zu transportieren, wenn die Ausstoßvorrichtung, insbesondere nach einem Ausstoßvorgang, die Grundposition einnimmt.

Durch diese Ausgestaltung einer erfindungsgemäßen Vereinzelungsvorrichtung ist vorteilhafterweise sichergestellt, dass in der Trägereinheit aufbewahrte, scheibenförmige Lebensmittelprodukte automatisiert einzeln abgegeben werden können, um damit beispielsweise eine Pizza oder ein Sandwich zu belegen. Diese automatisierte Vereinzelung wird dadurch sichergestellt, dass die Etagen der Trägereinheit, die jeweils einzelne Lebensmittelprodukte enthalten, schrittweise einzeln aus dem Aufnahmebehälter befördert werden. Ist jeweils eine neue Etage mit einem aufgelegten Lebensmittelprodukt aus dem Aufnahmebehälter transportiert, wird die Ausstoßvorrichtung von der Grundposition in die Ausstoßposition verstellt. In dieser Position wird die Ausstoßvorrichtung zumindest teilweise in der Etage der Trägereinheit, in der sich das Lebensmittelprodukt befindet, eingeführt, sodass die Ausstoßvorrichtung das auf dem Produktträger aufgelegte Lebensmittelprodukt vom Produktträger stößt und derart aus der Trägereinheit befördert wird. Durch diese Ausgestaltung einer erfindungsgemäßen Vorrichtung ist vorteilhafterweise auch eine vereinzelte Abgabe von empfindlichen Lebensmittelprodukten, wie Tomatenscheiben oder anderen Obst- und Gemüsescheiben, sichergestellt.

Die Ausstoßvorrichtung kann ihre Ausstoßposition dabei außerhalb des Aufnahmebehälters einnehmen, was vorteilhaft ist, wenn jeweils ein Lebensmittelprodukt von einer, von der Transporteinheit aus dem Aufnahmebehälter transportierten, Etage der Trägereinheit - d.h. einer Etage, die sich außerhalb des Aufnahmebehälters befindet - befördert werden soll. Die Ausstoßvorrichtung kann ihre Ausstoßposition jedoch optional auch bei z.B. entsprechender Ausgestaltung des Aufnahmebehälters innerhalb des Aufnahmebehälters erreichen, beispielsweise wenn der Aufnahmebehälter an z.B. Seiten- oder Mantelflächen entsprechende Ausnehmungen, Klappen oder dergleichen aufweist, durch die einerseits die Ausstoßvorrichtung in den Aufnahmebehälter zwischen die Produktträger der Trägereinheit verstellbar ist und andererseits die Lebensmittelprodukte durch die Ausstoßvorrichtung einzeln aus der Trägereinheit und aus dem Aufnahmebehälter beförderbar sind. Optional können bei einer erfindungsgemäßen Vereinzelungsvorrichtung auch beide Varianten der Ausstoßposition vorgesehen sein und je nach zu vereinzelndem Lebensmittelprodukt gewählt werden.

Dadurch, dass die Trägereinheit in einem Aufnahmebehälter aufgenommen ist und in diesem geführt wird, während die Trägereinheit von der Transporteinheit aus dem Aufnahmebehälter befördert wird, wird etwaiger aus der Trägereinheit tropfender Saft von Gemüse- oder Obst-Lebensmittelprodukten zuverlässig aufgefangen, sodass Sauberkeit und Hygiene bei der Herstellung der Gerichte, die mit den einzeln ausgegebenen scheibenförmigen Lebensmittelprodukten belegt werden, sichergestellt sind.

Im Zusammenhang mit der Erfindung ist unter einer Scheibe bzw. scheibenförmig nicht nur ein geometrischer Körper in Form eines Zylinders, dessen Radius um ein Vielfaches höher ist als seine Dicke, zu verstehen, sondern ganz generell ein Körper mit beliebiger Querschnittsfläche, dessen Höhe um ein Vielfaches geringer ist als dessen Erstreckung in der Ebene.

Eine besonders präzise Abstimmung der Bewegungen der Transportvorrichtung und der Ausstoßvorrichtung aufeinander bei gleichzeitig kompaktem Aufbau der Vorrichtung kann erzielt werden, wenn die Vereinzelungsvorrichtung eine mit der Transportvorrichtung und der Ausstoßvorrichtung verbundene Steuereinheit umfasst, die dazu ausgebildet ist,
- die Transportvorrichtung anzusteuern, jeweils eine Etage der Trägereinheit aus dem Aufnahmebehälter zu transportieren, wenn die Vereinzelungseinheit die Grundposition einnimmt und
- die Ausstoßvorrichtung zur Verstellung von der Grundposition in die Ausstoßposition und von der Ausstoßposition in die Grundposition anzusteuern,
wobei die Steuereinheit dazu ausgebildet ist,
- nach dem Transport einer neuen Etage der Trägereinheit aus dem Aufnahmebehälter die Ausstoßvorrichtung zur Verstellung in die Ausstoßposition anzusteuern, und anschließend
- die Ausstoßvorrichtung zur Verstellung in die Grundposition anzusteuern.

Um einen möglichst kontinuierlichen Betrieb der Vereinzelungsvorrichtung ohne länger Stillstandzeiten sicherzustellen, kann vorgesehen sein, dass die Steuereinheit dazu ausgebildet ist, die Transportbewegung der Transportvorrichtung zu überwachen und nach dem Transport einer vorgegebenen, insbesondere der letzten Etage der Trägereinheit aus dem Aufnahmebehälter ein Warnsignal abzugeben, wobei insbesondere vorgesehen ist, dass die Anzahl der Etagen der Trägereinheit in der Steuereinheit hinterlegt ist.

Auf diese Weise ist gewährleistet, dass das Bedienpersonal gewarnt wird, wenn eine bestimmte Etage der Trägereinheit aus dem Aufnahmebehälter befördert ist, sodass es bereits beispielsweise eine neue, befüllte Trägereinheit vorbereiten kann, um die leere Trägereinheit rasch zu ersetzen, sodass die Stillstandzeit der Vorrichtung minimiert bzw. vollständig eliminiert wird.

Für einen besonders einfachen Wechsel einer entleerten Trägereinheit kann vorgesehen sein, dass die Steuereinheit dazu ausgebildet ist, nach dem Transport der letzten Etage der Trägereinheit aus dem Aufnahmebehälter die Transportvorrichtung anzusteuern, die Trägereinheit in die Ausgangsposition im Aufnahmebehälter zurückzutransportieren und die Trägereinheit abzukoppeln, wobei insbesondere vorgesehen ist, dass die Anzahl der Etagen der Trägereinheit in der Steuereinheit hinterlegt ist.

Dadurch, dass bei dieser Ausgestaltung einer erfindungsgemäßen Vereinzelungsvorrichtung die entleerte Trägereinheit wieder in ihre Ausgangsposition im Aufnahmebehälter zurücktransportiert und abgekoppelt wird, kann die Trägereinheit samt Aufnahmebehälter mit eventuell aufgefangenem Saft oder dergleichen einfach und rasch aus der Vorrichtung entnommen und durch eine neue Trägereinheit mit Aufnahmebehälter ersetzt werden.

Um bei einer erfindungsgemäßen Vereinzelungsvorrichtung bei der Ausgabe der Lebensmittelprodukte zusätzlich die Wirkung der Schwerkraft ausnützen zu können, kann vorgesehen sein, dass der Aufnahmebehälter auf einer schiefen Ebene angeordnet ist, die in einem Winkel, insbesondere von 5 bis 45 Grad, zur Waagrechten ausgerichtet ist, und dass die Ebene der einzelnen Produktträger der Trägereinheit in ihrem im Aufnahmebehälter geführten Zustand im Wesentlichen in demselben Winkel zur Waagrechten ausgerichtet ist.

Durch diese Ausgestaltung der Vereinzelungsvorrichtung rutschen die auf den Produktträgern aufgelegten Lebensmittelprodukte bedingt durch die Wirkung der Schwerkraft beim Ausbringen durch die Ausstoßvorrichtung besser aus der Trägereinheit. Dies ermöglicht eine noch schonendere Beförderung besonders empfindlicher Lebensmittelprodukte. Die Wirkung der Schwerkraft vereinfacht zusätzlich das Nachbestücken einer erfindungsgemäßen Vereinzelungsvorrichtung mit befüllten Trägereinheiten bzw. Aufnahmebehältern, wenn mehrere Aufnahmebehälter mit Trägereinheiten auf der schiefen Ebene gelagert werden. Wird eine leere Trägereinheit samt Aufnahmebehälter entnommen, rutscht eine befüllte, weitere Trägereinheit in einem weiteren Aufnahmebehälter einfach nach.

Um die Wirkung der Schwerkraft bei der Ausbringung der einzelnen Lebensmittelprodukte noch gezielter nutzen zu können, kann vorgesehen sein, dass die Ausstoßvorrichtung linear in einer Ebene, die im Wesentlichen in demselben Winkel zur Waagrechten ausgerichtet ist, wie die schiefe Ebene, verstellbar ist.

Auf diese Weise wirken die Schwerkraft sowie die von der Ausstoßvorrichtung übertragene Kraft in dieselbe Richtung, was die Beförderung der Lebensmittelprodukte noch schonender macht.

Um den Wechsel von entleerten Trägereinheiten weiter zu beschleunigen und somit die Stillstandzeit der Vorrichtung weiter zu reduzieren, kann vorgesehen sein, dass (i) die Vorrichtung zumindest eine weitere Trägereinheit und einen weiteren Aufnahmebehälter zur Aufnahme und Führung der weiteren Trägereinheit umfasst, wobei der weitere Aufnahmebehälter auf der schiefen Ebene angeordnet ist und insbesondere (ii) die Vorrichtung eine Entnahmevorrichtung umfasst, die dazu ausgebildet ist, nach dem Rücktransport der Trägereinheit in die Ausgangsposition die Trägereinheit und den Aufnahmebehälter von der schiefen Ebene zu entnehmen, insbesondere abzuwerfen.

Durch diese Ausgestaltung ist einerseits sichergestellt, dass entleerte Trägereinheiten mit dem Aufnahmebehälter samt aufgefangenem Gemüsesaft oder dergleichen durch die Entnahmevorrichtung aus der Vorrichtung transportiert werden. Andererseits ist durch die Lagerung von einem oder mehreren weiteren Aufnahmebehältern samt Trägereinheit auf der schiefen Ebene sichergestellt, dass ein weiterer Aufnahmebehälter samt Trägereinheit nachrutscht, sobald die entleerte Trägereinheit samt Aufnahmebehälter entnommen ist. Dies reduziert die Stillstandzeit der Vorrichtung weiter, sodass es zu praktisch keiner Unterbrechung der Ausgabe von Lebensmittelprodukten im regulären Betrieb der Vorrichtung kommt.

Besonders vorteilhaft kann in diesem Zusammenhang sein, wenn die Steuereinheit dazu ausgebildet ist, die Entnahmevorrichtung zur Entnahme, insbesondere zum Abwurf, der Trägereinheit und des Aufnahmebehälters anzusteuern, sodass die Vorrichtung kompakt und mit geringer Anzahl an einzelnen Komponenten ausgeführt werden kann.

Ein besonders rascher Weiterbetrieb der Vereinzelungsvorrichtung nach der Entnahme einer entleerten Trägereinheit kann sichergestellt werden, wenn die Steuereinheit dazu ausgebildet ist, die Transportvorrichtung anzusteuern, nach der Entnahme der Trägereinheit und des Aufnahmebehälters von der schiefen Ebene die weitere Trägereinheit anzukoppeln.

Auf diese Weise koppelt sich die Transportvorrichtung rasch ohne menschliches Zutun an die weitere, gefüllte Trägereinheit, sodass die Abgabe von vereinzelten Lebensmittelprodukten aus der weiteren Trägereinheit besonders rasch begonnen werden kann.

Ein besonders schonender Weitertransport von einzeln ausgegebenen Lebensmittelprodukten zu beispielsweise weiteren Verarbeitungsstationen im Rahmen der Zubereitung von Gerichten kann gewährleistet werden, wenn die Vereinzelungsvorrichtung eine an die Oberkante des Aufnahmebehälters geführte Plattform umfasst, wobei auf den Produktträgern aufgelegte Lebensmittelprodukte durch die Ausstoßvorrichtung einzeln aus der Trägereinheit auf die Plattform beförderbar sind und wobei insbesondere vorgesehen ist, dass die Plattform
- in demselben Winkel zur Waagrechten ausgerichtet ist, wie die schiefe Ebene oder
- waagrecht ausgerichtet ist.

Besonders kompakt kann die Trägereinheit ausgestaltet werden, wenn die Trägereinheit insbesondere jeder der Produktträger der Trägereinheit, einen im Wesentlichen runden Querschnitt aufweist und wenn der Aufnahmebehälter als an einer Seite offener Hohlzylinder ausgebildet ist.

Eine besonders rasch herzustellende und wieder zu lösende Kopplung zwischen der Transporteinheit und der Trägereinheit kann gewährleistet werden, wenn die Trägereinheit eine Befestigungsvorrichtung, insbesondere einen Haken oder Bügel, an ihrer vom Boden des Aufnahmebehälters abgewandten Seite zur Kopplung mit der Transportvorrichtung aufweist.

Eine besonders rasch herzustellende und wieder zu lösende Kopplung zwischen der Transporteinheit und dem Aufnahmebehälter kann gewährleistet werden, wenn der Boden des Aufnahmebehälters eine Befestigungsvorrichtung, insbesondere einen Haken oder Bügel, zur Kopplung mit der Transportvorrichtung aufweist, und wenn die Transportvorrichtung dazu ausgebildet ist, durch Verstellung des Bodens des Aufnahmebehälters die Trägereinheit linear schrittweise aus ihrer Ausgangsposition aus dem Aufnahmebehälter zu transportieren.

Eine besonders zuverlässige Sicherung der Lebensmittelprodukte gegen ein Herausfallen aus der Trägereinheit bei gleichzeitig effektivem Schutz der Lebensmitteprodukte vor Austrocknung kann sichergestellt werden, wenn eine Etage der Trägereinheit von jeweils zwei Produktträgern begrenzt wird, wobei insbesondere vorgesehen ist, dass der Abstand zwischen jeweils zwei Produktträgern im Wesentlichen der Höhe des aufzulegenden Lebensmittelprodukts entspricht.

Gemäß einer besonders vorteilhaften Variante einer erfindungsgemäßen Vereinzelungsvorrichtung mit besonders geringem Bedienaufwand kann vorgesehen sein, dass die Vereinzelungsvorrichtung zumindest eine weitere Trägereinheit und zumindest einen weiteren Aufnahmebehälter zur Aufnahme und Führung der weiteren Trägereinheit umfasst, und
dass die Vereinzelungsvorrichtung eine Entnahmevorrichtung umfasst, die dazu ausgebildet ist,
   - nach dem Rücktransport der Trägereinheit in die Ausgangsposition die Trägereinheit und den Aufnahmebehälter aus der Vereinzelungsvorrichtung zu entnehmen, insbesondere abzuwerfen, und
   - den weitere Aufnahmebehälter mit der weiteren Trägereinheit, insbesondere mittels eines Kolbens und/oder einer Kettenführung, an die Stelle der zuvor entnommenen, insbesondere abgeworfenen, Aufnahmebehälters weiterzutransportieren,
wobei vorzugsweise vorgesehen ist, dass die Steuereinheit dazu ausgebildet ist, die Entnahmevorrichtung zur Entnahme, insbesondere zum Auswurf, der Trägereinheit und des Aufnahmebehälters und/oder zum Weitertransport des weiteren Aufnahmebehälters mit der weiteren Trägereinheit anzusteuern.

Aufgabe der Erfindung ist es weiters, ein Verfahren zur vereinzelten Abgabe eines scheibenförmigen Lebensmittelprodukts mit einer Vereinzelungsvorrichtung bereitzustellen, das ebenso für die automatisierte Ausgabe empfindlicher Lebensmittelprodukte wie Tomaten geeignet ist, Sauberkeit und eine hygienische und sichere Herstellung sowie gleichbleibende Qualität der hergestellten Gerichte gewährleistet.

Die Erfindung löst diese Aufgabe mit einem Verfahren zur vereinzelten Abgabe eines scheibenförmigen Lebensmittelprodukts mit einer erfindungsgemäßen Vereinzelungsvorrichtung gemäß Patentanspruch 15.

Dabei sind folgende Schritte vorgesehen:
- wobei eine mit Lebensmittelprodukten befüllte Trägereinheit in ihre Ausgangsposition im Aufnahmebehälter eingebracht wird,
- wobei die Transportvorrichtung mit der Trägereinheit und/oder dem Aufnahmebehälter gekoppelt wird,
- wobei die Trägereinheit linear schrittweise von der Transportvorrichtung aus ihrer Ausgangsposition aus dem Aufnahmebehälter transportiert wird und derart schrittweise jeweils eine Etage der Trägereinheit aus dem Aufnahmebehälter transportiert wird,
- wobei die Ausstoßvorrichtung linear relativ zur Trägereinheit und parallel zur Ebene der Produktträger aus ihrer Grundposition, in der sich die Ausstoßvorrichtung außerhalb der Trägereinheit befindet, in ihre Ausstoßposition, in der die Ausstoßvorrichtung außerhalb und/oder innerhalb des Aufnahmebehälters zumindest teilweise zwischen die Produktträger der Trägereinheit eingebracht ist, verstellt wird, und derart das auf dem Produktträger der, insbesondere zuletzt, aus dem Aufnahmebehälter transportierten Etage aufgelegte Lebensmittelprodukt durch die Ausstoßvorrichtung einzeln aus der Trägereinheit befördert wird,
- wobei die Ausstoßvorrichtung aus der Ausstoßposition in die Grundposition verstellt wird und
- wobei von der Transportvorrichtung im Anschluss an die Verstellung der Ausstoßvorrichtung in die Grundposition eine neue Etage der Trägereinheit aus dem Aufnahmebehälter transportiert wird.

Die Erfindung betrifft weiters eine Anlage zur Zubereitung von assemblierten Lebensmitteln umfassend eine erfindungsgemäße Vereinzelungsvorrichtung. Besonders vorteilhaft kann in diesem Zusammenhang sein, wenn die Vereinzelungsvorrichtung modulartig aus der Anlage herausziehbar und/oder austauschbar ausgebildet ist.

Weitere Vorteile und Ausgestaltungen der Erfindung ergeben sich aus der Beschreibung und den beiliegenden Zeichnungen.

Die Erfindung ist im Folgenden anhand von besonders vorteilhaften, aber nicht einschränkend zu verstehenden Ausführungsbeispielen in den Zeichnungen schematisch dargestellt und wird unter Bezugnahme auf die Zeichnungen beispielhaft beschrieben.

Im Folgenden zeigen schematisch:
Fig. 1 die Befüllung einer Trägereinheit mit Lebensmittelprodukten,
Fig. 2 die befüllte Trägereinheit aus Fig. 1 mit einem entsprechenden Aufnahmebehälter,
Fig. 3 die befüllte Trägereinheit aus Fig. 1 in ihrer Ausgangsposition im Aufnahmebehälter,
Fig. 4 die Kopplung der Trägereinheit aus Fig. 1 mit einer Transportvorrichtung,
Fig. 5 eine Ausstoßvorrichtung in der Grundposition der Ausstoßvorrichtung,
Fig. 6 die Ausstoßvorrichtung aus Fig. 5 in der Ausstoßposition der Ausstoßvorrichtung,
Fig. 7 den Transport einer neuen Etage der Trägereinheit aus dem Aufnahmebehälter, wenn die Ausstoßvorrichtung aus Fig. 5 die Grundposition einnimmt,
Fig. 8 ein Ausführungsbeispiel einer erfindungsgemäßen Vereinzelungsvorrichtung,
Fig. 9 eine Schnittansicht der Vereinzelungsvorrichtung aus Fig. 8,
Fig. 10 eine Detailansicht des Aufnahmebehälters der Vereinzelungsvorrichtung aus Fig. 8,
Fig. 11 eine Detailansicht der Trägereinheit der Vereinzelungsvorrichtung aus Fig. 8,
Fig. 12 die Trägereinheit aus Fig. 11 geführt im Aufnahmebehälter aus Fig. 11.

Im Folgenden werden der Aufbau und die Funktionsweise einer erfindungsgemäßen Vereinzelungsvorrichtung 100 zur vereinzelten Abgabe eines scheibenförmigen Lebensmittelprodukts 10 im Zusammenhang mit der Abgabe von Tomatenscheiben beispielhaft beschrieben.

Dieses Ausführungsbeispiel dient jedoch lediglich zur Erläuterung des Aufbaus und der Funktionsweise der erfindungsgemäßen Vereinzelungsvorrichtung 100 und eine erfindungsgemäße Vereinzelungsvorrichtung 100 kann selbstverständlich auch für die einzelne Abgabe von beliebigen anderen, scheibenförmigen Lebensmittelprodukten 10 im Zusammenhang mit der automatisierten Herstellung bzw. dem automatisierten Belegen von Gerichten verwendet werden.

Eine erfindungsgemäße Vereinzelungsvorrichtung 100 zur vereinzelten Abgabe eines scheibenförmigen Lebensmittelprodukts 10 umfasst zumindest eine Trägereinheit 1 mit mehreren parallel zueinander ausgerichteten Etagen 11, in der die abzugebenden Lebensmitteprodukte 10 einzeln aufbewahrt bzw. vorsepariert werden. In diese fächerartige Trägereinheit 1 werden die zu separierenden bzw. einzeln abzugebenden, manuell oder automatisch auf eine gewünschte Höhe x, y, z zugeschnittenen, Lebensmittelprodukte manuell oder automatisiert eingeführt. D.h. die Trägereinheit 1 wird manuell oder automatisiert mit den zu separierenden Lebensmittelprodukten 10 befüllt.

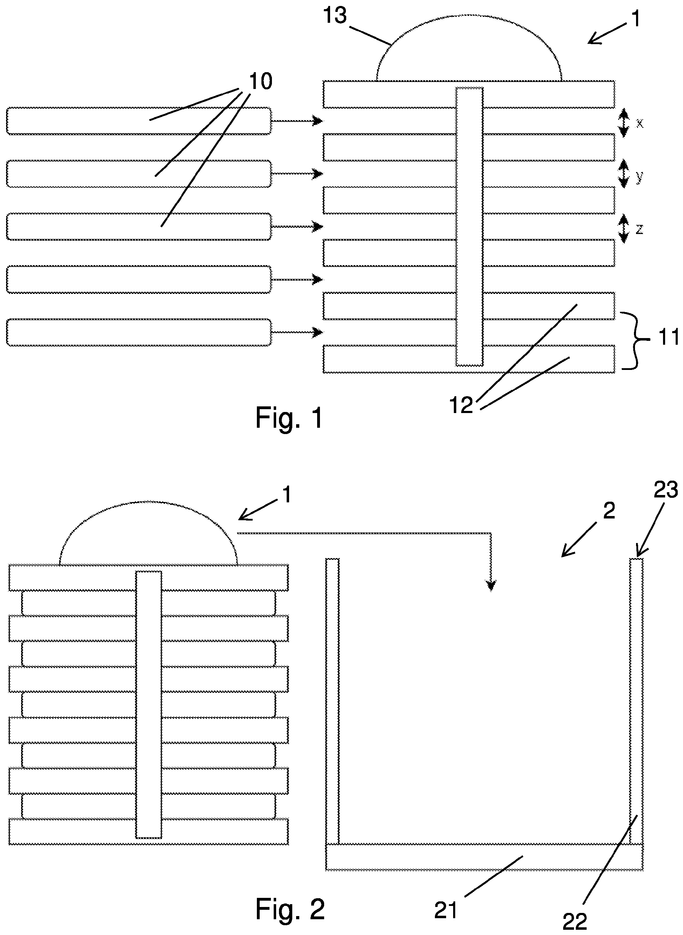

Bei dem in Fig. 1 dargestellten Ausführungsbeispiel einer Trägereinheit 1 werden die einzelnen Etagen 11 jeweils von zwei Produktträgern 12 begrenzt, auf denen die einzelnen Lebensmittelprodukte 10 - im Ausführungsbeispiel Tomatenscheiben - aufgelegt werden können.

Im Ausführungsbeispiel ist der Abstand zwischen jeweils zwei Produktträgern 12, d.h. die Höhe einer Etage 11, so gewählt, dass er im Wesentlichen der Höhe der aufgelegten Tomatenscheiben entspricht. Die Schnittflächen der Tomatenscheiben werden bei einer derartigen Trägereinheit 1 von den Produktträgern 12 abgedeckt, sodass kaum Luft an die Schnittflächen gelangt. Dies schützt die Tomatenscheiben vor dem Austrocknen und verhindert unappetitliche bzw. optisch oder anderweitig qualitativ unerwünschte Verfärbungen, die durch den Kontakt mit Luft entstehen können. Die Abstimmung der Etagenhöhe auf die Höhe der Lebensmittelprodukte schützt wasserhaltige Lebensmittel ganz generell vor einem Austrocknen an den Schnittflächen. Die Höhe der Etagen 11 kann jedoch je nach Anwendungsfall beliebig variiert werden, was in Fig. 1 durch die Pfeile mit der Beschriftung x, y und z angedeutet ist.

Die einzelnen Produktträger 12 der Trägereinheit 1 weisen im Ausführungsbeispiel einen kreisförmigen Querschnitt auf und die Querschnittsfläche entspricht annähernd der Fläche der aufgelegten Tomatenscheiben. Diese Ausgestaltung stellt sicher, dass die Trägereinheit 1 einerseits besonders kompakt ist und andererseits die Tomatenscheiben auch einfach von den Produktträgern 12 befördert werden können.

Eine erfindungsgemäße Vereinzelungsvorrichtung 100 umfasst weiters zumindest einen Aufnahmebehälter 2, der in Fig. 2 beispielhaft schematisch dargestellt ist und der die Trägereinheit 1 aufnimmt und als Führung in der Vereinzelungsvorrichtung 100 dient. Der Aufnahmebehälter 2 weist einen Boden 21 und eine Wandfläche 22 auf. Im Ausführungsbeispiel ist der Aufnahmebehälter 2 als Hohlzylinder ausgestaltet, der an der dem Boden 21 gegenüberliegenden Seite offen ist. Die Wandfläche 22 kann als durchgehende, geschlossene, dichte Fläche ausgestaltet sein. Dies ist besonders vorteilhaft, um aus den Lebensmittelprodukten 10 tropfenden Saft, Kerne oder dergleichen aufzufangen. Alternativ dazu, kann die Wandfläche 22 optional selbstverständlich auch Ausnehmungen aufweisen.

Alternativ zu der hohlzylindrischen Form im Ausführungsbeispiel kann der Aufnahmebehälter 2 ein erfindungsgemäßen Vereinzelungsvorrichtung 100 als Hohlkörper mit jeder beliebiger Querschnittsform ausgestaltet sein, wobei die Form der Produktträger 12 an die Querschnittsform des Aufnahmebehälters 2 angepasst ist. Dies ermöglicht eine bestmögliche Anpassung der Trägereinheit 1 und des Aufnahmebehälters 2 an die auszugebenden Lebensmittelprodukte 10.

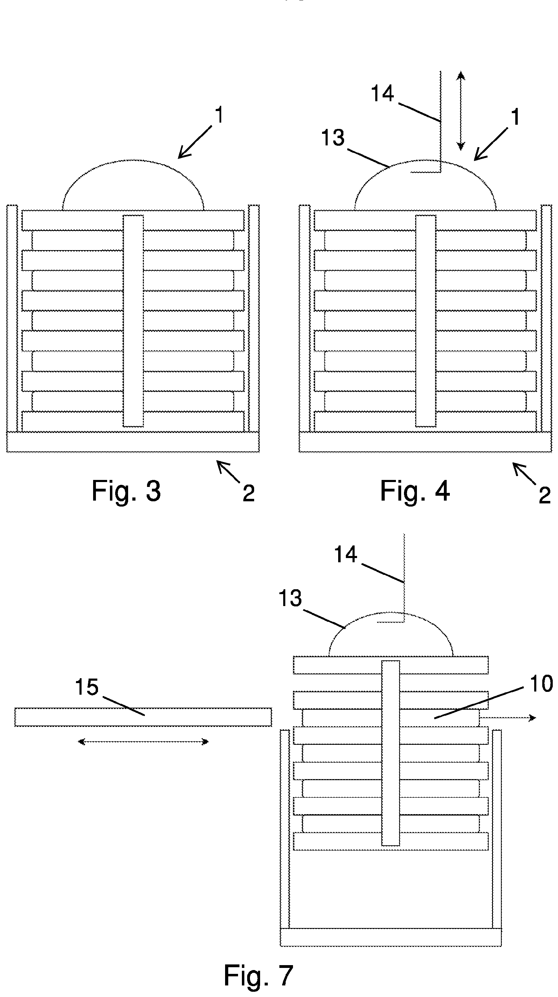

Die Trägereinheit 1 besitzt im Ausführungsbeispiel weiters eine als Bügel ausgestaltete Befestigungsvorrichtung 13 für die Kopplung mit einer Transportvorrichtung 5 der Vereinzelungsvorrichtung 100. Auf die Transportvorrichtung 5 wird weiter unten noch näher eingegangen. Der Bügel ist an der vom Boden 22 des Aufnahmebehälters 2 abgewandten Seite der Trägereinheit 1 angeordnet (siehe Fig. 3 und Fig. 4).

Wie in Fig. 3 ersichtlich ist, ist die Trägereinheit 1 im Ausführungsbeispiel in ihrer Ausgangsposition vollständig im Aufnahmebehälter 2 aufgenommen. Somit werden eventuell aus den Tomatenscheiben austretender Saft bzw. Kerne im Aufnahmebehälter 2 aufgefangen und eine Verschmutzung der Vereinzelungsvorrichtung 100 wird vermieden.

Wie in Fig. 4 dargestellt, koppelt im Ausführungsbeispiel eine Transportvorrichtung 5 an die Befestigungsvorrichtung 13 der Trägereinheit 1 an. Dies wird im Ausführungsbeispiel durch einen Haken 14 erzielt, der in die Befestigungsvorrichtung 13, also den Bügel, eingreift. Die Transportvorrichtung 5 transportiert die Trägereinheit 1 schrittweise aus ihrer Ausgangsposition aus dem Aufnahmebehälter 2 heraus, sodass nach und nach jeweils eine Etage 11 aus dem Aufnahmebehälter 2 transportiert wird. Es handelt sich dabei um eine lineare Bewegung, was in Fig. 4 durch den senkrecht verlaufenden Pfeil angedeutet ist, und die Trägereinheit 1 wird dabei vom Aufnahmebehälter 2 bzw. der Wandfläche 22 des Aufnahmebehälters 2 geführt.

Die Transportvorrichtung 5 kann auf vielfältigste Weise realisiert werden. Entscheidend ist lediglich, dass die Transportvorrichtung 5 einen schrittweisen Transport der Trägereinheit 1 ermöglicht.

Im Ausführungsbeispiel hebt die Transportvorrichtung 5 die Trägereinheit 1 vertikal aus dem Aufnahmebehälter 2. Diese Transportbewegung ist jedoch nicht einschränkend zu verstehen und sie kann auch in einem Winkel zur Lotrechten erfolgen, beispielsweise wenn der Aufnahmebehälter 2 auf einer schiefen Ebene 3 angeordnet ist. Darauf wird weiter unten noch näher eingegangen.

Alternativ zu einer Kopplung mit der Trägereinheit 1 ist auch eine Kopplung der Transportvorrichtung 5 z.B. mit dem Boden 21 des Aufnahmebehälters 2 möglich. Der Boden 21 des Aufnahmebehälters 2 ist in diesem Fall verschiebbar und verfügt über eine umfängliche Abdichtung zur Wandfläche 22 des Aufnahmebehälters 2, sodass auch bei einer Verschiebung keine Flüssigkeit auslaufen kann. Die Trägereinheit 1 sitzt auf dem Boden 21 des Aufnahmebehälters 2 auf und wird bei einer Verstellung bzw. Verschiebung des Bodens 21 mitverschoben und derart werden die einzelnen Etagen 11 aus dem Aufnahmebehälter 2 transportiert, während die Wandfläche 22 des Aufnahmebehälters 2 nicht mitverschoben wird und statisch bleibt.

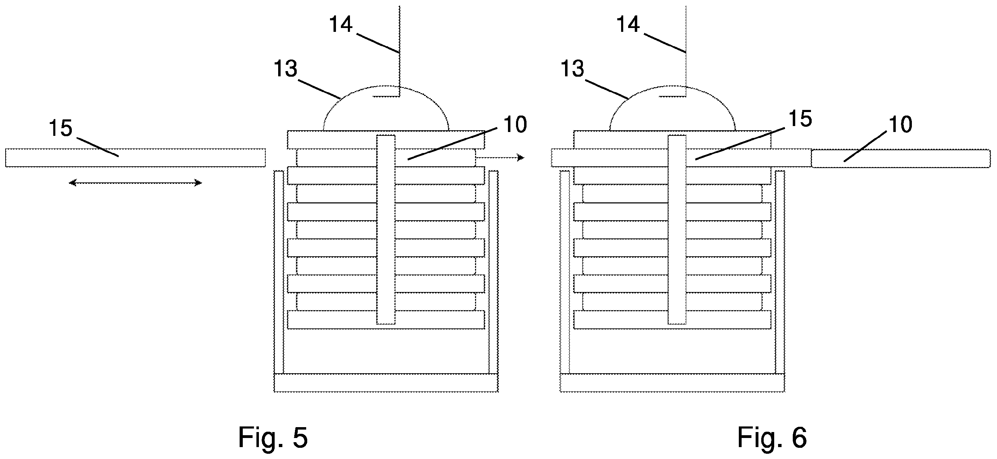

Zum Ausstoß des Lebensmittelprodukts 10 aus der Trägereinheit 1 bzw. zur Beförderung des Lebensmittelprodukts 10 vom Produktträger 12 wird im Ausführungsbeispiel eine Ausstoßvorrichtung 6 mit einem Stempel 15 eingesetzt. Die Ausstoßvorrichtung 6 mit dem Stempel 15 bewegt sich im Ausführungsbeispiel reversibel von einer Grundposition (siehe Fig. 5), in der sich die Ausstoßvorrichtung 6 bzw. der Stempel 15 der Ausstoßvorrichtung 6 außerhalb der Trägereinheit 1 befindet, in eine Ausstoßposition (siehe Fig. 6), in der die Ausstoßvorrichtung 6 bzw. der Stempel 15 der Ausstoßvorrichtung 6 zumindest teilweise zwischen die Produktträger 12 der Trägereinheit 1 eingebracht ist und zurück.

Die Bewegung der Ausstoßvorrichtung 7 erfolgt linear relativ zur, d.h. in Richtung der, Trägereinheit 1 und parallel zur Ebene der Produktträger 12. Um diese lineare Bewegung parallel zur Ebene, in der sich die Produktträger 12 erstrecken, und in Richtung der der Trägereinheit 1 im Ausführungsbeispiel zu realisieren, wird die Ausstoßvorrichtung 6 an einem Metallrahmen geführt.

Auch die Ausstoßvorrichtung 6 kann auf unterschiedlichste Weise realisiert werden. Entscheidend ist dabei nur, dass die Ausstoßvorrichtung 6, abgestimmt auf den Transport der Trägereinheit 1, durch die Transportvorrichtung 5, eine Verstellung zwischen der Grundposition und der Ausstoßposition vornehmen kann.

In den Fig. 5 und Fig. 6 wird schematisch im Detail dargestellt, wie der Stempel 15 jeweils in die von der Transporteinheit 5 neu aus dem Aufnahmebehälter 2 transportierte, unmittelbar über der Oberkante 23 des Aufnahmebehälter 2 befindliche Etage 11 der Trägereinheit 1, die über den Aufnahmebehälter 2 herausragt, geschoben wird. D.h. der Stempel 15 der Ausstoßvorrichtung 6 greift im Ausführungsbeispiel zwischen die einzelnen Produktträger 12 der jeweiligen Etage 11 der Trägereinheit 1 ein und drückt so die auf den Produktträgern 12 aufgelegten Tomatenscheiben aus der Trägereinheit 1 heraus.

Anschließend bewegt sich die Ausstoßvorrichtung 6 wieder aus der Ausstoßposition in der Trägereinheit 1 heraus in die Grundposition. Die Bewegung der Transportvorrichtung 5 ist auf die Bewegung der Ausstoßvorrichtung 6 abgestimmt und die Trägereinheit 1 wird von der Transportvorrichtung 5 in die nächste gewünschte Position bewegt, sobald sich die Ausstoßvorrichtung 6 in der Grundposition befindet. D.h. die nächste Etage 11 der Trägereinheit 1 wird aus dem Aufnahmebehälter 2 gehoben (siehe Fig. 7), sobald sich die Ausstoßvorrichtung 6 in der Grundposition befindet und der Stempel 15 vereinzelt daraufhin die nächste Tomatenscheibe.

Im Ausführungsbeispiel in den Fig. 1 bis 7 übernimmt eine Steuereinheit, die mit der Transportvorrichtung 5 und der Ausstoßvorrichtung 6 verbunden ist, die Koordinierung der Bewegungen der Transportvorrichtung 5 und der Ausstoßvorrichtung 6. Befindet sich die Ausstoßvorrichtung 6 in der Grundposition, steuert die Steuereinheit zunächst die Transportvorrichtung 5 an, eine Etage 11 der Trägereinheit 1 aus dem Aufnahmebehälter 2 zu transportierten.

Nach diesem Transport einer neuen Etage 11 der Trägereinheit 1 aus dem Aufnahmebehälter 2 steuert die Steuereinheit die Ausstoßvorrichtung 6 zur Verstellung von der Grundposition in die Ausstoßposition an. Ist das Lebensmittelprodukt 10 aus der Trägereinheit 1 befördert, steuert die Steuereinheit die Ausstoßvorrichtung 6 zur Verstellung in die Grundposition an. Dazu können sowohl die Transportvorrichtung 5 als auch die Ausstoßvorrichtung 6 über einen Servomotor verfügen.

Eine derartige Steuereinheit ist jedoch optional und es ist auch eine Ausgestaltung einer erfindungsgemäßen Vereinzelungsvorrichtung 100 möglich, bei der beispielsweise die Transportvorrichtung 5 über einen Servomotor verfügt und die Ausstoßvorrichtung 6 mit einer Feder vorgespannt ist und automatisch ausgelöst wird, sobald eine neue Etage 11 der Trägereinheit 1 aus dem Aufnahmebehälter 2 transportiert wurde. In diesem Fall erfolgt nur bei der Transportvorrichtung 5 eine elektronische Ansteuerung.

Weiters optional kann die Steuereinheit eine Reihe von Funktionen übernehmen, um einen quasi kontinuierlichen Betrieb der Vereinzelungsvorrichtung sicherzustellen, bei dem keine größeren Stillstandzeiten entstehen, die durch das Befüllen der Trägereinheit 1 mit Lebensmittelprodukten 10 entstehen könnten.

Beispielsweise kann die Steuereinheit ein Warnsignal in Form z.B. eines akustischen oder optischen Signals abgeben, wenn eine der letzten oder die letzte Etage 11 der Trägereinheit 1 aus dem Aufnahmebehälter 2 transportiert wurde, sodass das Bedienpersonal von der Vereinzelungsvorrichtung 100 informiert wird, dass die Trägereinheit 1 demnächst entleert sein wird oder bereits entleert ist. Dies ist besonders hilfreich, um ein rasches Wechseln der Trägereinheit 1 zu gewährleisten, sodass möglichst ohne Unterbrechungen Lebensmittelprodukte 10 abgegeben werden können. In der Steuereinheit ist hierzu optional die Anzahl der Etagen 11 der Trägereinheit 1 hinterlegt und die Steuereinheit überwacht, wie viele der Etagen 11 bereits aus dem Aufnahmebehälter 2 transportiert wurden.

Optional kann die Steuereinheit auch dazu eingerichtet sein, zu überprüfen, ob tatsächlich ein Lebensmittelprodukt 10 aus der Trägereinheit 1 befördert wurde, nachdem die Ausstoßvorrichtung 6 in die Ausstoßposition verstellt wurde. Wurde kein Lebensmittelprodukt 10 aus der Trägereinheit 1 befördert, d.h. sollte ein Produktträger 12 nicht mit einem Lebensmittelprodukt 10 bestückt gewesen sein, kann die Steuereinheit optional ein Warnsignal abgeben.

Alternativ oder zusätzlich dazu kann die Steuereinheit dazu ausgebildet sein, zu ermitteln, wie oft ein Produktträger 12 nicht mit einem Lebensmittelprodukt 11 bestückt war und eine Entnahmevorrichtung 4, auf die weiter unten noch näher eingegangen wird, dazu ansteuern, die Trägereinheit 1 mitsamt dem Aufnahmebehälter 2 aus der Vereinzelungsvorrichtung 100 zu entnehmen, sollte mehrmals hintereinander kein Lebensmittelprodukt 10 aufgelegt gewesen sein, da dann die Trägereinheit 1 als leer erkannt wird.

Ist die letzte Etage 11 der Trägereinheit 1 aus dem Aufnahmebehälter 2 transportiert, kann die Steuereinheit die Transportvorrichtung 5 weiters optional ansteuern, die Trägereinheit 1 wieder in den Aufnahmebehälter 2 abzusenken und den Haken 14 von der Befestigungsvorrichtung 13 zu lösen, sodass die Trägereinheit 1 samt Aufnahmebehälter 2 rasch ausgetauscht werden kann, ohne dass das Bedienpersonal der Vereinzelungsvorrichtung 100 noch die Verbindung zwischen Trägereinheit 1 und Transportvorrichtung 5 lösen müsste.

Zwar ist in den Fig. 1 bis Fig. 7 des Ausführungsbeispiels der Aufnahmebehälter 2 samt Trägereinheit 1 auf einer waagrechten Ebene angeordnet, sodass die Transportbewegung der Transportvorrichtung 5 vertikal und die Verstellbewegung der Vereinzelungseinheit 6 waagrecht erfolgen. Dies ist jedoch optional.

Besonders vorteilhaft ist nämlich, wenn anstelle einer waagrechten Ebene, eine schiefe Ebene 3, die einen Winkel zur Waagrechten einnimmt, genutzt wird. In diesem Fall trägt die Wirkung der Schwerkraft zu einer besonders schonenden Ausgabe der Lebensmittelprodukte 10 bei, da diese nicht nur durch die Ausstoßvorrichtung 6 aus der Trägereinheit 1 bzw. vom Produktträger 12 gedrückt werden, sondern zusätzlich durch die Schwerkraftwirkung gleiten. Dies ist besonders vorteilhaft bei besonders empfindlichen Obst- und Gemüsesorten.

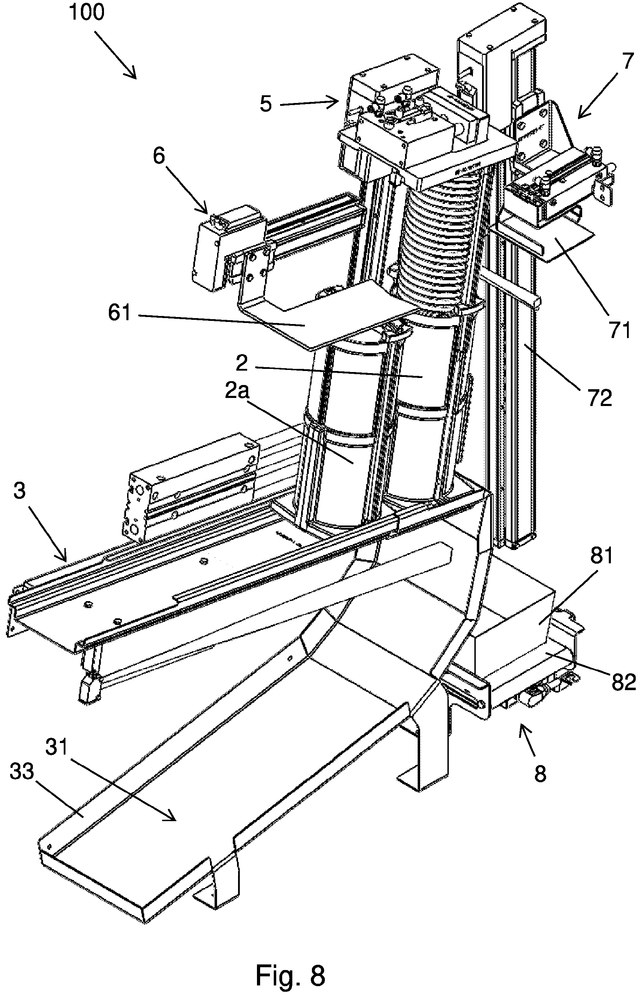

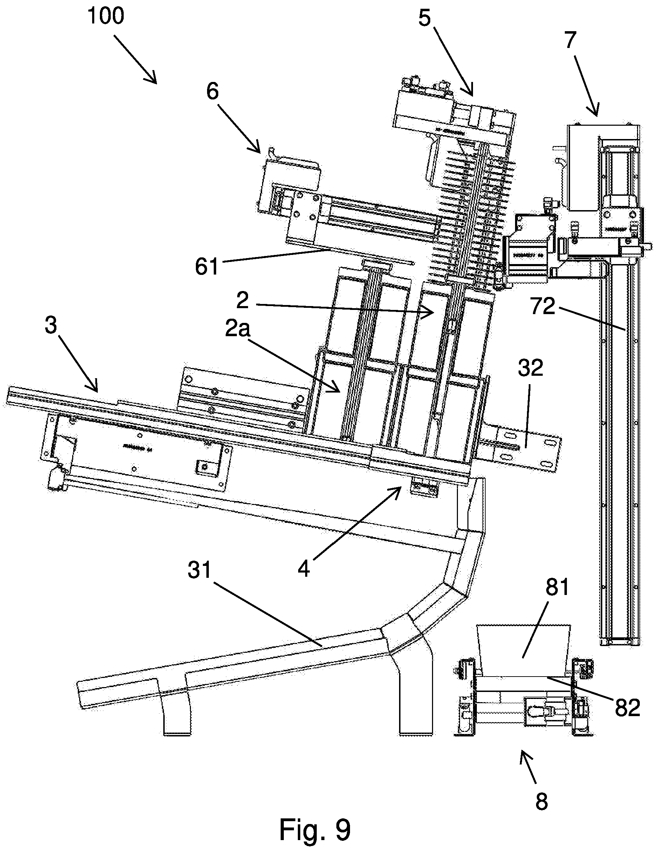

In Fig. 8 und Fig. 9 ist ein Ausführungsbeispiel einer erfindungsgemäßen Vereinzelungsvorrichtung 100 mit einer derartigen schiefen Ebene 3 schematisch dargestellt.

Dadurch, dass der Aufnahmebehälter 2 auf der schiefen Ebene 3 steht und die Trägereinheit 1 während des Transports durch die Transporteinheit 5 vom Aufnahmebehälter 2 geführt wird, nehmen die Produktträger 12 ebenfalls zumindest annähernd denselben Winkel zur Waagrechten ein, wie die schiefe Ebene 3 und auch die Transportbewegung der Transportvorrichtung 5 und die Verstellbewegung der Ausstoßvorrichtung 6 erfolgen in annähernd demselben Winkel zur Waagrechten.

Wie in Fig. 9 ersichtlich ist, umfasst die Ausstoßvorrichtung 6 im Ausführungsbeispiel eine Platte 61, die zwischen die Produktträger 12 der Trägereinheit 1 geführt wird und in der Ausstoßposition in die jeweilige Etage 11 der Trägereinheit 1 eingreift. Die Platte 61 wird von einem Servomotor zwischen der Grundposition außerhalb der Trägereinheit 1 und der Ausstoßposition, die sich im Ausführungsbespiel außerhalb des Aufnahmebehälters 2 befindet, verstellt und wird dazu an einem Rahmen geführt.

An diesem Rahmen ist auch der Motor der Transportvorrichtung 5 angeordnet, die die Trägereinheit 1 bzw. deren Etagen 11 mit den Produktträgern 12 und den Tomatenscheiben darauf, aus dem Aufnahmebehälter 2 transportiert. Durch diese Anordnung der Transportvorrichtung 5 und der Ausstoßvorrichtung 6 an einem Rahmen sind diese fest verbunden und somit ist die Relation bzw. das Verhältnis der Verstell- und Transportbewegung zueinander stets korrekt.

Da die Vereinzelungsvorrichtung 100 über eine schiefe Ebene 3 verfügt, auf die der Aufnahmebehälter 2 mit der Trägereinheit 1 gestellt wird, können zusätzlich, wie in Fig. 8 und Fig. 9 gezeigt, selbstverständlich auch noch weitere Aufnahmebehälter 2a mit weiteren Trägereinheiten 1a vorgesehen sein, die ebenfalls auf der schiefen Ebene 3 aufgestellt werden. Dies gewährleistet einen besonders raschen Austausch von entleerten Trägereinheiten 1 samt Aufnahmebehälter 2.

Wird nämlich eine entleerte Trägereinheit 1 wieder in die Ausgangsposition im Aufnahmebehälter 2 zurücktransportiert und samt Aufnahmebehälter 2 aus der Vereinzelungsvorrichtung 100 entnommen, rutscht ein weiterer Aufnahmebehälter 2a mit einer befüllten weiteren Trägereinheit 1a einfach nach und die Abgabe der Lebensmittelprodukte 10 kann lediglich mit einer geringen Unterbrechung für die Kopplung der Transportvorrichtung 5 mit der weiteren Trägereinheit 1a wie in Fig. 8 und Fig. 9 - oder alternativ dazu dem Boden des weiteren Aufnahmebehälters 2a - weitergehen.

Bei einer derartigen schiefen Ebene 3 kann es sich, wie in Fig. 8 und Fig. 9, um eine in einem Winkel zur Waagrechten ausgerichtete ebene Fläche handeln. Eine derartige schiefe Ebene 3 kann jedoch auch anders, beispielsweise in Form von in einem Winkel zur Waagrechten ausgerichteten Schienen realisiert werden, an denen die Trägereinheit 1 samt Aufnahmebehälter 2 und gegebenenfalls weitere Trägereinheiten 1a bzw. deren Befestigungsvorrichtung samt weiteren Aufnahmebehältern 2a geführt sind.

Wie in Fig. 9 ersichtlich ist, umfasst die Vereinzelungsvorrichtung 100 weiters einen Winkel 32, der an demjenigen Ende der schiefen Ebene 3 angeordnet ist, das dem Boden bzw. der Aufstellungsfläche der Vereinzelungsvorrichtung 100 näher ist. Der Winkel 32 sichert die Aufnahmebehälter 2, 2a gegen ein unerwünschtes Abrutschen von der schiefen Ebene 3 ab.

Eine weitere Führung der Aufnahmebehälter 2, 2a auf der schiefen Ebene 3 wird im Ausführungsbeispiel durch einen Flansch 24 erzielt, der sich am unteren Ende des Aufnahmebehälters 2, 2a, der auf der schiefen Ebene 3 aufsitzt, befindet. Der Flansch 24 kann, wie in Fig. 8 dargestellt, durch Führungsbleche oder dergleichen geführt werden, und so ein seitliches Abrutschen oder Herunterkippen der Aufnahmebehälter 2, 2a von der schiefen Ebene 3 verhindern. Zusätzlich bietet er eine Griffmöglichkeit für das Bedienpersonal bei der Entnahme der Aufnahmebehälter 2, 2a von der Vereinzelungsvorrichtung 100, worauf weiter unten noch näher eingegangen wird.

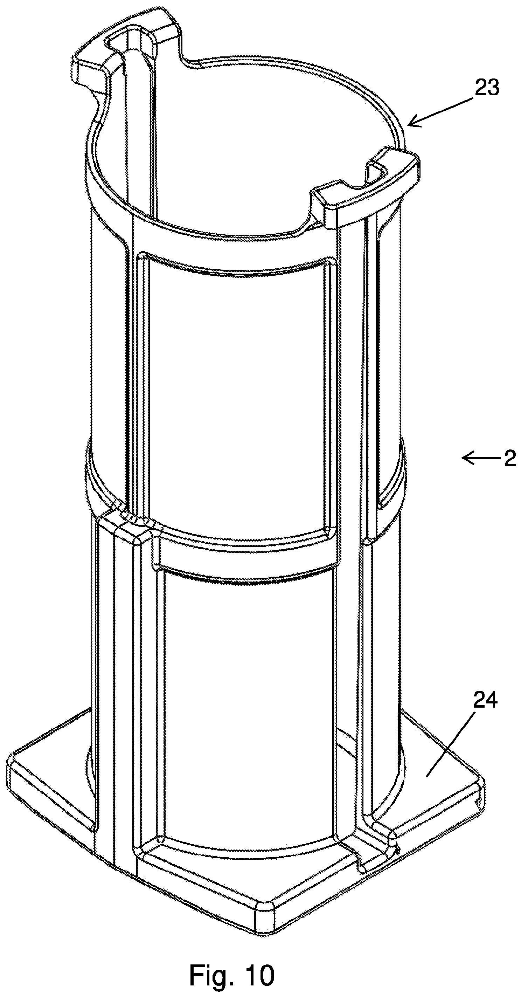

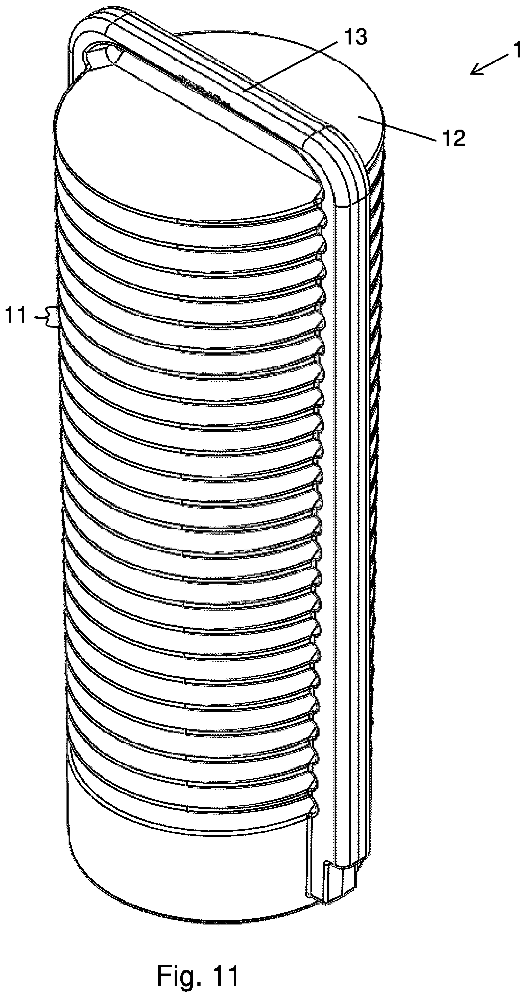

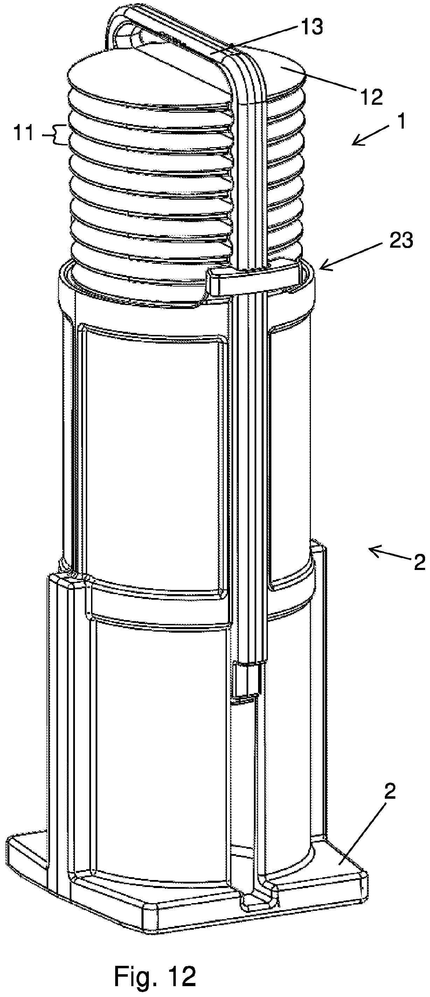

Der grundsätzliche Aufbau eines Aufnahmebehälters 2 und einer Trägereinheit 1 wurde bereits zuvor im Detail beschrieben und trifft auch auf das Ausführungsbeispiel in Fig. 8 und Fig. 9 bzw. die Detailansichten in Fig. 10, Fig. 11 und Fig. 12 zu. Wie in Fig. 11 ersichtlich ist, erstreckt sich die Befestigungsvorrichtung 13, in Fig. 11 wieder ein Bügel, auch seitlich entlang der fächerförmigen Trägereinheit 1 entlang. Dies ermöglicht einerseits dem Bedienpersonal, die Trägereinheit 1 noch besser greifen und halten zu können, und andererseits eine verbesserte Führung im Aufnahmebehälter 2, wie dies in Fig. 12 dargestellt ist.

Erstreckt sich nämlich die Befestigungsvorrichtung 13 auch noch seitlich entlang der Trägereinheit 1 und weist der Aufnahmebehälter 2 entsprechende Nuten oder, wie in Fig. 10 und Fig. 12 seitliche, sich entlang der Behälterwand erstreckende, Ausnehmungen, auf, ist die Trägereinheit 1 gegen Drehen bzw. Rotieren im Aufnahmebehälter 2 gesichert. Dies verbessert auch die Kopplung mit der Transporteinheit 5.

Die Entnahme der entleerten Trägereinheit 1 mit dem Aufnahmebehälter 2 kann entweder manuell durch das Bedienpersonal der Vereinzelungsvorrichtung 100 oder mittels einer Entnahmevorrichtung 4 wie einem Greifer, einer Klappe oder dergleichen auch automatisiert erfolgen. Ist eine Steuereinheit zur Steuerung der Transport- und Ausstoßvorrichtung vorgesehen, kann die Steuereinheit auch die Ansteuerung der Entnahmevorrichtung 4 übernehmen.

Im Ausführungsbeispiel in Fig. 8 und Fig. 9 umfasst die Vereinzelungsvorrichtung 100 eine durch eine Steuereinheit gesteuerte Entnahmevorrichtung 4 in Form einer Klappe zur Entnahme von entleerten Trägereinheiten 1 mitsamt den entsprechenden Aufnahmebehältern 2.

Stellt die Steuereinheit beispielsweise fest, dass die letzte Etage 11 der Trägereinheit 1 aus dem Aufnahmebehälter 2 transportiert wurde, steuert sie, wie oben beschrieben, die Transportvorrichtung 5 an, die Trägereinheit 1 zurück in die Ausgangsposition im Aufnahmebehälter 2 zu befördern und die Trägereinheit 1 abzukoppeln. Anschließend steuert die Steuereinheit die Entnahmevorrichtung 4 an, die entleerte Trägereinheit 1 mit dem Aufnahmebehälter 2 zu entnehmen.

Die als Klappe ausgebildete Entnahmevorrichtung 4 öffnet sich und der Aufnahmebehälter 2 mit der entleerten Trägereinheit 1 rutscht, wie in Fig. 9 ersichtlich ist, über eine Art Rutsche 31, beispielsweise ein gebogenes Blech, von der schiefen Ebene 3. Die Rutsche 31 weist an ihren Längsseiten und an ihrer Stirnseite einen aufgebogenen Anteil 33 auf, der als Führung dient und verhindert, dass der Aufnahmebehälter 2 von der Rutsche 31 fällt und diesen am Ende der Rutsche 31 stoppt. Von dieser Position kann der Aufnahmebehälter 2 samt Trägereinheit 1 vom Bedienperson entnommen werden, um beides zu reinigen und die Trägereinheit 1 anschließend wieder mit Tomatenscheiben zu bestücken.

Ist die Trägereinheit 1 mit dem Aufnahmebehälter 2 von der schiefen Ebene 3 durch die Klappe gerutscht, rutscht eine weitere Trägereinheit 1a in einem weiteren Aufnahmebehälter 2a nach. Dieses Nachrutschen kann von einem Sensor auf der schiefen Ebene festgestellt werden, der ein entsprechendes Signal an die Steuereinheit oder die Transportvorrichtung 5 sendet, was die Transportvorrichtung 5 zur Kopplung mit der weiteren Trägereinheit 1a veranlasst.

Für einen Weitertransport der vereinzelten Lebensmittelprodukte 10 kann die Vereinzelungsvorrichtung 100 optional eine an die Oberkante 23 des Aufnahmebehälters 2 anschließende, bzw. in den Bereich der Oberkante 23 des Aufnahmebehälters 2 geführte, Plattform 71 aufweisen, auf die die Lebensmittelprodukte 10 befördert werden. Von dort können sie mit beispielsweise einem Förderband oder einer Rutsche an den Ort der weiteren Verwendung gebracht werden.

Im Ausführungsbeispiel in Fig. 8 und Fig. 9 umfasst die Vereinzelungsvorrichtung 100 eine derartige Plattform 71, die mit einem motorisiert betriebenen Lift 7 verbunden ist. Im Ausführungsbeispiel handelt es sich bei der Plattform 71 um eine Platte, beispielsweise ein waagrechtes Blech, das durch den Lift 7 an die Oberkante 23 des Aufnahmebehälters 2 führbar ist.

Wie in Fig. 9 ersichtlich ist, wird die Plattform 71 derart an die Oberkante 23 bzw. in den Bereich der Oberkante 23 des Aufnahmebehälters 2 geführt, dass Tomatenscheiben, die durch die Ausstoßvorrichtung 6 von einem Produktträger 12 befördert werden, auf die Plattform 71 rutschen. Der Lift 7 transportiert anschließend, wie in Fig. 9 gezeigt, die Tomatenscheibe auf der Plattform 71 geführt über Schienen 72 an den Ort der weiteren Verwendung - im Ausführungsbeispiel werden die Tomatenscheiben zu einer weiteren Transportvorrichtung 8 befördert.

Die weitere Transportvorrichtung 8 umfasst im Ausführungsbeispiel einen oder mehrere Behälter 81, in denen die mit den Tomatenscheiben zu belegende Gerichte - beispielsweise eine Pizza - auf einem Förderband 82 an der Vereinzelungsvorrichtung 100 vorbeitransportiert werden, um die Gerichte mit den Tomatenscheiben zu belegen. Hat der Lift die Plattform 71 in den Bereich des Behälters 81 transportiert, kippt der Lift 7 die Plattform 71 und die Tomatenscheibe rutscht auf die Pizza im Behälter 81. Anschließend transportiert der Lift die Plattform 71 wieder in den Bereich der Oberkante 23 des Behälters 2, um die nächste Tomatenscheibe aufzunehmen.

Alternativ zum Kippen kann der Lift 7 die Plattform 71 optional auch nach hinten wegziehen, wobei die Tomatenscheibe zunächst durch ein kleines Blech, das sich hinter der Plattform 71 befindet, in Position gehalten wird, sodass die Tomatenscheibe dann gerade auf die darunter befindliche Pizza fällt.

Weiters alternativ zum Kippen der Plattform 71, kann die Plattform 71 optional auch beispielsweise eine Falltür aufweisen, um das darauf befindliche Lebensmittelprodukt 10 wieder abzugeben.

Selbstverständlich kann die Bewegung des Lifts ebenfalls durch die Steuereinheit gesteuert werden. Es ist auch möglich, dass mehrere Tomatenscheiben von der Plattform 71 aufgenommen werden, bevor diese zum Behälter 81 bzw. den darin befindlichen Gerichten transportiert wird.

Selbstverständlich kann eine erfindungsgemäße Vereinzelungsvorrichtung 100 auch Teil einer ganzen Anlage zur Zubereitung von assemblierten Lebensmitteln wie Pizzen, Sandwiches, Tacos oder dergleichen sein. Die Vereinzelungsvorrichtung 100 ist daher als in sich geschlossenes, selbstständiges Modul ausgestaltet, das in eine derartige Anlage reversibel ein- und wieder ausgebaut werden kann. Dies ermöglicht einen einfachen Austausch bzw. ein Herausziehen aus der Anlage, sollte die Vereinzelungsvorrichtung 100 gerade nicht benötigt werden.

### Bezugszeichenliste

- 1: Trägereinheit
- 1a: weitere Trägereinheit
- 2: Aufnahmebehälter
- 2a: weiterer Aufnahmebehälter
- 10: Lebensmittelprodukt
- 11: Etage der Trägereinheit
- 12: Produktträger
- 13: Befestigungsvorrichtung
- 14: Haken der Transportvorrichtung
- 15: Stempel der Ausstoßvorrichtung
- 21: Boden des Aufnahmebehälters
- 22: Wandfläche des Aufnahmebehälters
- 23: Oberkante des Aufnahmebehälters
- 24: Flansch des Aufnahmebehälters
- 3: schiefe Ebene
- 31: Rutsche
- 32: Winkel
- 33: aufgebogenen Anteil der Rutsche
- 4: Entnahmevorrichtung
- 5: Transportvorrichtung
- 6: Ausstoßvorrichtung
- 61: Platte der Ausstoßvorrichtung
- 7: Lift
- 71: Plattform
- 72: Schienen
- 8: weitere Transportvorrichtung
- 81: Behälter
- 82: Förderband

## Patentansprüche

1. Vereinzelungsvorrichtung (100) zur vereinzelten Abgabe eines scheibenförmigen Lebensmittelprodukts (10) umfassend
- eine Trägereinheit (1) mit einer Mehrzahl von Etagen (11) zur Aufnahme der einzelnen Lebensmittelprodukte (10), wobei die Etagen (11) parallel zueinander ausgerichtet sind und jeweils einen Produktträger (12) umfassen, auf den die einzelnen Lebensmittelprodukte (10) jeweils auflegbar sind,
- einen Aufnahmebehälter (2) zur Aufnahme und Führung der Trägereinheit (1), wobei die Trägereinheit (1) in einer Ausgangsposition, insbesondere vollständig, im Aufnahmebehälter (2) aufgenommen ist,
- eine Transportvorrichtung (5), die mit der Trägereinheit (1) und/oder dem Aufnahmebehälter (2) koppelbar ist und dazu ausgebildet ist, die Trägereinheit (1) linear schrittweise aus ihrer Ausgangsposition aus dem Aufnahmebehälter (2) zu transportieren, sodass schrittweise jeweils eine Etage (11) der Trägereinheit (1) aus dem Aufnahmebehälter (2) transportierbar ist, und
- eine Ausstoßvorrichtung (6), die linear relativ zur Trägereinheit (1) und parallel zur Ebene der Produktträger (12) aus einer Grundposition, in der sich die Ausstoßvorrichtung (6) außerhalb der Trägereinheit (1) befindet, in eine Ausstoßposition, in der die Ausstoßvorrichtung (6) außerhalb und/oder innerhalb des Aufnahmebehälters (2) zumindest teilweise zwischen die Produktträger (12) der Trägereinheit (1) eingebracht ist, reversibel verstellbar ist, sodass derart auf den Produktträgern (12) aufgelegte Lebensmittelprodukte (10) durch die Ausstoßvorrichtung (6) einzeln aus der Trägereinheit (1) beförderbar sind,
wobei die Transportvorrichtung (5) dazu ausgebildet ist, jeweils eine Etage (11) der Trägereinheit (1) aus dem Aufnahmebehälter (2) zu transportieren, wenn die Ausstoßvorrichtung (6), insbesondere nach einem Ausstoßvorgang, die Grundposition einnimmt.

2. Vereinzelungsvorrichtung (100) nach Anspruch 1, **dadurch gekennzeichnet, dass** die Vereinzelungsvorrichtung (100) eine mit der Transportvorrichtung (5) und der Ausstoßvorrichtung (6) verbundene Steuereinheit umfasst, die dazu ausgebildet ist,
- die Transportvorrichtung (5) anzusteuern, jeweils eine Etage (11) der Trägereinheit (1) aus dem Aufnahmebehälter (2) zu transportieren, wenn die Ausstoßvorrichtung (6) die Grundposition einnimmt und
- die Ausstoßvorrichtung (6) zur Verstellung von der Grundposition in die Ausstoßposition und von der Ausstoßposition in die Grundposition anzusteuern
wobei die Steuereinheit dazu ausgebildet ist,
- nach dem Transport einer neuen Etage (11) der Trägereinheit (1) aus dem Aufnahmebehälter (2) die Ausstoßvorrichtung (6) zur Verstellung in die Ausstoßposition anzusteuern, und anschließend
- die Ausstoßvorrichtung (6) zur Verstellung in die Grundposition anzusteuern.

3. Vereinzelungsvorrichtung (100) nach Anspruch 2, **dadurch gekennzeichnet, dass** die Steuereinheit dazu ausgebildet ist, die Transportbewegung der Transportvorrichtung (5) zu überwachen und nach dem Transport einer vorgegebenen, insbesondere der letzten, Etage (11) der Trägereinheit (1) aus dem Aufnahmebehälter (2) ein Warnsignal abzugeben, wobei insbesondere vorgesehen ist, dass die Anzahl der Etagen (11) der Trägereinheit (1) in der Steuereinheit hinterlegt ist.

4. Vereinzelungsvorrichtung (100) nach Anspruch 2 oder 3, **dadurch gekennzeichnet, dass** die Steuereinheit dazu ausgebildet ist, nach dem Transport der letzten Etage (11) der Trägereinheit (1) aus dem Aufnahmebehälter (2) die Transportvorrichtung (5) anzusteuern, die Trägereinheit (1) in die Ausgangsposition im Aufnahmebehälter (2) zurückzutransportieren und die Trägereinheit (1) abzukoppeln, wobei insbesondere vorgesehen ist, dass die Anzahl der Etagen (11) der Trägereinheit (1) in der Steuereinheit hinterlegt ist.

5. Vereinzelungsvorrichtung (100) nach einem der vorangehenden Ansprüche, **dadurch gekennzeichnet, dass** der Aufnahmebehälter (2) auf einer schiefen Ebene (3) angeordnet ist, die in einem Winkel, insbesondere von 5 bis 45 Grad, zur Waagrechten ausgerichtet ist, und dass die Ebene der einzelnen Produktträger (12) der Trägereinheit (1) in ihrem im Aufnahmebehälter (2) geführten Zustand im Wesentlichen in demselben Winkel zur Waagrechten ausgerichtet ist.

6. Vereinzelungsvorrichtung (100) nach Anspruch 5, **dadurch gekennzeichnet, dass** die Ausstoßvorrichtung (6) linear in einer Ebene, die im Wesentlichen in demselben Winkel zur Waagrechten ausgerichtet ist, wie die schiefe Ebene (3), verstellbar ist.

7. Vereinzelungsvorrichtung (100) nach einem der Ansprüche 5 oder 6, **dadurch gekennzeichnet,**
**dass** die Vereinzelungsvorrichtung (100) zumindest eine weitere Trägereinheit (1a) und zumindest einen weiteren Aufnahmebehälter (2a) zur Aufnahme und Führung der weiteren Trägereinheit (1a) umfasst, wobei der weitere Aufnahmebehälter (2a) auf der schiefen Ebene (3) angeordnet ist,
wobei insbesondere vorgesehen ist, dass die Vereinzelungsvorrichtung (100) eine Entnahmevorrichtung (4) umfasst, die dazu ausgebildet ist, nach dem Rücktransport der Trägereinheit (1) in die Ausgangsposition die Trägereinheit (1) und den Aufnahmebehälter (2) von der schiefen Ebene (3) zu entnehmen, insbesondere abzuwerfen,
wobei vorzugsweise vorgesehen ist, dass die Steuereinheit dazu ausgebildet ist, die Entnahmevorrichtung (4) zur Entnahme, insbesondere zum Auswurf, der Trägereinheit (1) und des Aufnahmebehälters (2) anzusteuern.

8. Vereinzelungsvorrichtung (100) nach Anspruch 7, **dadurch gekennzeichnet, dass** die Steuereinheit dazu ausgebildet ist, die Transportvorrichtung (5) anzusteuern, nach der Entnahme der Trägereinheit (1) und des Aufnahmebehälters (2) von der schiefen Ebene (3) die weitere Trägereinheit (1a) anzukoppeln.

9. Vereinzelungsvorrichtung (100) nach einem der vorangehenden Ansprüche, **dadurch gekennzeichnet, dass** der Aufnahmebehälter (2) eine Oberkante (23) aufweist und dass die Vereinzelungsvorrichtung (100) eine an die Oberkante (23) des Aufnahmebehälters (2) geführte Plattform (71) umfasst, wobei auf den Produktträgern (12) aufgelegte Lebensmittelprodukte (10) durch die Ausstoßvorrichtung (6) einzeln aus der Trägereinheit (1) auf die Plattform (71) beförderbar sind
und wobei insbesondere vorgesehen ist, dass die Plattform (71)
- in demselben Winkel zur Waagrechten ausgerichtet ist, wie die schiefe Ebene (3) oder
- waagrecht ausgerichtet ist.

10. Vereinzelungsvorrichtung (100) nach einem der vorangehenden Ansprüche, **dadurch gekennzeichnet, dass** Trägereinheit (1), insbesondere jeder der Produktträger (12) der Trägereinheit (1), einen im Wesentlichen runden Querschnitt aufweist und dass der Aufnahmebehälter (2) als an einer Stirnseite offener Hohlzylinder ausgebildet ist.

11. Vereinzelungsvorrichtung (100) nach einem der vorangehenden Ansprüche, **dadurch gekennzeichnet, dass** der Aufnahmebehälter (2) einen Boden (21) aufweist und dass die Trägereinheit (1) eine Befestigungsvorrichtung (13), insbesondere einen Haken oder Bügel, an ihrer vom Boden (21) des Aufnahmebehälters (2) abgewandten Seite zur Kopplung mit der Transportvorrichtung (5) aufweist.

12. Vereinzelungsvorrichtung (100) nach einem der vorangehenden Ansprüche, **dadurch gekennzeichnet, dass** der Aufnahmebehälter (2) einen Boden (21) aufweist und dass der Boden (21) des Aufnahmebehälters (2) eine Befestigungsvorrichtung, insbesondere einen Haken oder Bügel, zur Kopplung mit der Transportvorrichtung (5) aufweist, und dass die Transportvorrichtung (5) dazu ausgebildet ist, durch Verstellung des Bodens (21) des Aufnahmebehälters (2) die Trägereinheit (1) linear schrittweise aus ihrer Ausgangsposition aus dem Aufnahmebehälter (2) zu transportieren.

13. Vereinzelungsvorrichtung (100) nach einem der vorangehenden Ansprüche, **dadurch gekennzeichnet, dass** eine Etage der Trägereinheit (1) von jeweils zwei Produktträgern (12) begrenzt wird, wobei insbesondere vorgesehen ist, dass der Abstand zwischen jeweils zwei Produktträgern (12) im Wesentlichen der Höhe des aufzulegenden Lebensmittelprodukts (10) entspricht.

14. Vereinzelungsvorrichtung (100) nach einem der vorangehenden Ansprüche, **dadurch gekennzeichnet, dass** die Vereinzelungsvorrichtung (100) zumindest eine weitere Trägereinheit (1a) und zumindest einen weiteren Aufnahmebehälter (2a) zur Aufnahme und Führung der weiteren Trägereinheit (1a) umfasst, und
dass die Vereinzelungsvorrichtung (100) eine Entnahmevorrichtung (4) umfasst, die dazu ausgebildet ist,
- nach dem Rücktransport der Trägereinheit (1) in die Ausgangsposition die Trägereinheit (1) und den Aufnahmebehälter (2) aus der Vereinzelungsvorrichtung (100) zu entnehmen, insbesondere abzuwerfen, und
- den weitere Aufnahmebehälter (2a) mit der weiteren Trägereinheit (1a), insbesondere mittels eines Kolbens und/oder einer Kettenführung, an die Stelle der zuvor entnommenen, insbesondere abgeworfenen, Aufnahmebehälters (2) weiterzutransportieren,
wobei vorzugsweise vorgesehen ist, dass die Steuereinheit dazu ausgebildet ist, die Entnahmevorrichtung (4) zur Entnahme, insbesondere zum Auswurf, der Trägereinheit (1) und des Aufnahmebehälters (2) und/oder zum Weitertransport des weiteren Aufnahmebehälters (2a) mit der weiteren Trägereinheit (1a) anzusteuern.

15. Verfahren zur vereinzelten Abgabe eines scheibenförmigen Lebensmittelprodukts (10) mit einer Vereinzelungsvorrichtung (100) nach einem der Ansprüche 1 bis 14
- wobei eine mit Lebensmittelprodukten (10) befüllte Trägereinheit (1) in ihre Ausgangsposition im Aufnahmebehälter (2) eingebracht wird,
- wobei die Transportvorrichtung mit der Trägereinheit (1) und/oder dem Aufnahmebehälter (2) gekoppelt wird,
- wobei die Trägereinheit (1) linear schrittweise von der Transportvorrichtung (5) aus ihrer Ausgangsposition aus dem Aufnahmebehälter (2) transportiert wird und derart schrittweise jeweils eine Etage (11) der Trägereinheit (1) aus dem Aufnahmebehälter (2) transportiert wird,
- wobei die Ausstoßvorrichtung (6) linear relativ zur Trägereinheit (1) und parallel zur Ebene der Produktträger (12) aus ihrer Grundposition, in der sich die Ausstoßvorrichtung (6) außerhalb der Trägereinheit (1) befindet, in ihre Ausstoßposition, in der die Ausstoßvorrichtung (6) außerhalb und/oder innerhalb des Aufnahmebehälters (2) zumindest teilweise zwischen die Produktträger (12) der Trägereinheit (2) eingebracht ist, verstellt wird, und derart das auf dem Produktträger (12) der, insbesondere zuletzt, aus dem Aufnahmebehälter (2) transportierten Etage (11) aufgelegte Lebensmittelprodukt (10) durch die Ausstoßvorrichtung (6) einzeln aus der Trägereinheit (1) befördert wird,
- wobei die Ausstoßvorrichtung (6) aus der Ausstoßposition in die Grundposition verstellt wird und
- wobei von der Transportvorrichtung (5) im Anschluss an die Verstellung der Ausstoßvorrichtung (6) in die Grundposition eine neue Etage (11) der Trägereinheit (1) aus dem Aufnahmebehälter (2) transportiert wird.

16. Anlage zur Zubereitung von assemblierten Lebensmitteln, **dadurch gekennzeichnet, dass** die Anlage eine Vereinzelungsvorrichtung (100) nach einem der Ansprüche 1 bis 14 umfasst.

17. Anlage nach Anspruch 16, **dadurch gekennzeichnet, dass** die Vereinzelungsvorrichtung (100) modulartig aus der Anlage herausziehbar und/oder austauschbar ausgebildet ist.

## Claims

1. A separating device (100) for the individual dispensing of a disc-shaped food product (10), comprising
- a carrier unit (1) with a plurality of tiers (11) for holding the individual food products (10), wherein the tiers (11) are aligned parallel to one another and each comprise a product carrier (12) onto which the individual food products (10) can be placed,
- a receiving container (2) for receiving and guiding the carrier unit (1), wherein the carrier unit (1) is received, in particular completely, within the receiving container (2) in an initial position,
- a transport device (5) which can be coupled to the carrier unit (1) and/or the housing (2) and is designed to transport the carrier unit (1) linearly, step by step, from its initial position out of the receiving container (2), so that one tier (11) of the carrier unit (1) at a time can be transported out of the receiving container (2), and
- an ejection device (6) which moves linearly relative to the carrier unit (1) and parallel to the plane of the product carriers (12) from a home position, in which the ejection device (6) is located outside the carrier unit (1), to an ejection position, in which the ejection device (6) is positioned at least partially between the product carriers (12) of the carrier unit (1), either outside and/or inside the receiving container (2), so that food products (10) placed on the product carriers (12) can be conveyed individually out of the carrier unit (1) by the ejection device (6),
wherein the transport device (5) is designed to transport one tier (11) at a time of the carrier unit (1) out of the receiving container (2) when the ejection device (6) assumes its home position, in particular following an ejection operation.

2. A separating device (100) according to claim 1, **characterised in that** the separating device (100) comprises a control unit connected to the transport device (5) and the ejection device (6), which is designed to
- control the transport device (5) to transport one tier (11) of the carrier unit (1) at a time from the receiving container (2) when the ejection device (6) assumes the home position, and
- to control the ejection device (6) so that it moves from the home position to the ejection position and from the ejection position back to the home position
wherein the control unit is designed to
- after a new tier (11) of the carrier unit (1) has been transported from the receiving container (2), to control the ejection device (6) to move into the ejection position, and subsequently
- to control the ejection device (6) to move to the home position.

3. Separating device (100) according to claim 2, **characterised in that** the control unit is designed to monitor the transport movement of the transport device (5) and, following the transport of a predetermined number of tiers (11), in particular the last tier (11), of the carrier unit (1) from the receiving container (2) to emit a warning signal, whereby, in particular, the number of tiers (11) of the carrier unit (1) is stored in the control unit.

4. A separating device (100) according to claim 2 or 3, **characterised in that** the control unit is configured, after the last tier (11) of the carrier unit (1) has been transported out of the receiving container (2), to return the carrier unit (1) to its starting position in the receiving container (2) and to uncouple the carrier unit (1), wherein, in particular, the number of tiers (11) of the carrier unit (1) is stored in the control unit.

5. A separating device (100) according to any one of the preceding claims, **characterised in that** the receiving container (2) is arranged on an inclined plane (3) which is oriented at an angle, in particular from 5 to 45 degrees, to the horizontal, and that the plane of the individual product carriers (12) of the carrier unit (1), whilst guided within the receiving container (2), is oriented substantially at the same angle to the horizontal.

6. A separating device (100) according to claim 5, **characterised in that** the ejection device (6) is linearly adjustable in a plane which is oriented at substantially the same angle to the horizontal as the inclined plane (3).

7. A separating device (100) according to one of claims 5 or 6, **characterised in that**, that the separating device (100) comprises at least one further carrier unit (1a) and at least one further receiving container (2a) for receiving and guiding the further carrier unit (1a), wherein the further receiving container (2a) is arranged on the inclined plane (3),
whereby it is in particular provided that the separating device (100) comprises a removal device (4) which is designed to remove, and in particular to eject, the carrier unit (1) and the receiving container (2) from the inclined plane (3) after the carrier unit (1) has been returned to the starting position,
whereby it is preferably provided that the control unit is designed to activate the removal device (4) for the removal, in particular the ejection, of the carrier unit (1) and the receiving container (2).

8. A separating device (100) according to claim 7, **characterised in that** the control unit is configured to control the transport device (5) so that, following the removal of the carrier unit (1) and the receiving container (2) from the inclined plane (3), the next carrier unit (1a) is coupled.

9. A separating device (100) according to one of the preceding claims, **characterised in that** the receiving container (2) has an upper edge (23) and **in that** the separating device (100) comprises a platform (71) guided against the upper edge (23) of the receiving container (2), whereby food products (10) placed on the product carriers (12) can be conveyed individually from the carrier unit (1) onto the platform (71) by the ejection device (6)
and wherein, in particular, the platform (71)
- is oriented at the same angle to the horizontal as the inclined plane (3), or
- is aligned horizontally.

10. A separating device (100) according to any one of the preceding claims, **characterised in that** the carrier unit (1), in particular each of the product carriers (12) of the carrier unit (1), has a substantially circular cross-section, and **in that** the receiving container (2) is designed as a hollow cylinder open at one end.

11. A separating device (100) according to one of the preceding claims, **characterised in that** the receiving container (2) has a base (21) and **in that** the carrier unit (1) has a fastening device (13), in particular a hook or bracket, on its side facing away from the base (21) of the receiving container (2) for coupling with the transport device (5).

12. A separating device (100) according to any one of the preceding claims, **characterised in that** the receiving container (2) has a base (21) and **in that** the base (21) of the receiving container (2) has a fastening device, in particular a hook or bracket, for coupling with the transport device (5), and that the transport device (5) is designed to transport the carrier unit (1) linearly and in steps out of its initial position from the receiving container (2) by adjusting the base (21) of the receiving container (2).

13. A separating device (100) according to one of the preceding claims, **characterised in that** a tier of the carrier unit (1) is bounded by two product carriers (12) in each case, wherein it is in particular provided that the distance between any two product carriers (12) corresponds substantially to the height of the food product (10) to be placed thereon.

14. A separating device (100) according to one of the preceding claims, **characterised in that** the separating device (100) comprises at least one further carrier unit (1a) and at least one further receiving container (2a) for receiving and guiding the further carrier unit (1a), and
that the separating device (100) comprises a removal device (4) which is designed to
- following the return of the carrier unit (1) to its initial position, to remove the carrier unit (1) and the receiving container (2) from the separating device (100), in particular to eject them, and
- to transport the further collection container (2a) with the further carrier unit (1a), in particular by means of a piston and/or a chain guide, to the position of the previously removed, in particular ejected, receiving container (2),
whereby it is preferably provided that the control unit is configured to control the removal device (4) for the removal, in particular the ejection, of the carrier unit (1) and the receiving container (2) and/or for the onward transport of the further receiving container (2a) together with the further carrier unit (1a).

15. A method for the individual dispensing of a disc-shaped food product (10) using a separating device (100) according to any one of claims 1 to 14
- wherein a carrier unit (1) filled with food products (10) is placed in its initial position in the receiving container (2),
- wherein the transport device is coupled to the carrier unit (1) and/or the receiving container (2),
- wherein the carrier unit (1) is transported linearly, step by step, by the transport device (5) from its initial position out of the receiving container (2), such that one tier (11) of the carrier unit (1) at a time is transported out of the receiving container (2),
- wherein the ejection device (6) is moved linearly relative to the carrier unit (1) and parallel to the plane of the product carriers (12) from its home position-in which the ejection device (6) is located outside the carrier unit (1)-to its ejection position, in which the ejection device (6) is positioned, at least partially, between the product carriers (12) of the carrier unit (1), both outside and/or inside the receiving container (2), and in such a way that the food product (10) placed on the product carrier (12) of the tier (11) - in particular the one most recently transported from the receiving container (2), is conveyed individually out of the carrier unit (1) by the ejection device (6),
- whereby the ejection device (6) is moved from the ejection position to the home position, and
- whereupon, following the retraction of the ejection device (6) to the home position, the transport device (5) transports a new tier (11) of the carrier unit (1) from the receiving container (2).

16. A system for the preparation of assembled foodstuffs, **characterised in that** the system comprises a separating device (100) according to one of claims 1 to 14.

17. A system according to claim 16, **characterised in that** the separating device (100) is designed to be withdrawable and/or replaceable from the system in a modular manner.

## Revendications

1. Dispositif de distribution unitaire (100) destiné à la distribution individuelle d'un produit alimentaire en forme de disque (10), comprenant
- une unité de support (1) comportant une pluralité d'étages (11) destinés à recevoir les différents produits alimentaires (10), les étages (11) étant alignés parallèlement les uns aux autres et comprenant chacun un support de produit (12) sur lequel les différents produits alimentaires (10) peuvent être respectivement déposés,
- un réceptacle (2) destiné à recevoir et à guider l'unité de support (1), l'unité de support (1) étant logée, notamment entièrement, dans le réceptacle (2) dans une position initiale,
- un dispositif de transport (5) pouvant être couplé à l'unité de support (1) et/ou au réceptacle (2) et est conçu pour transporter l'unité de support (1) de manière linéaire et par étapes hors du réceptacle (2) depuis du sa position initiale, de sorte qu'un étage (11) de l'unité de support (1) puisse être transporté par étapes hors du réceptacle (2), et
- un dispositif d'éjection (6) qui se déplace de manière linéaire par rapport à l'unité de support (1) et parallèlement au plan des supports de produit (12), depuis une position de base, dans laquelle le dispositif d'éjection (6) se trouve à l'extérieur de l'unité de support (1), vers une position d'éjection, dans laquelle le dispositif d'éjection (6) est placée, au moins partiellement, à l'extérieur et/ou à l'intérieur du réceptacle (2), entre les supports de produits (12) de l'unité de support (1), de manière réversible, de sorte que les produits alimentaires (10) déposés sur les supports de produits (12) puissent être transportés un par un hors de l'unité de support (1) par le dispositif d'éjection (6), le dispositif de transport (5) étant conçu pour transporter respectivement un étage (11) de l'unité de support (1) hors du réceptacle (2) lorsque le dispositif d'éjection (6) occupe la position de base, en particulier après une opération d'éjection.

2. Dispositif de distribution unitaire (100) selon la revendication 1, **caractérisé en ce que** le dispositif de séparation (100) comprend une unité de commande reliée au dispositif de transport (5) et au dispositif d'éjection (6), qui est conçue pour
- commander le dispositif de transport (5) pour transporter respectivement un étage (11) de l'unité de support (1) hors du réceptacle (2) lorsque le dispositif d'éjection (6) occupe la position de base, et
- commander le dispositif d'éjection (6) pour le faire passer de la position de base à la position d'éjection et de la position d'éjection à la position de base
l'unité de commande étant conçue pour :
- après le transport d'un nouvel étage (11) de l'unité de support (1) depuis le réceptacle (2), de commander le dispositif d'éjection (6) pour qu'il se déplace vers la position d'éjection, puis
- de commander le dispositif d'éjection (6) pour qu'il se déplace vers la position de base.

3. Dispositif de distribution unitaire (100) selon la revendication 2, **caractérisé en ce que** l'unité de commande est conçue pour surveiller le mouvement de transport du dispositif de transport (5) et, après le transport d'un étage prédéfini, en particulier du dernier, étage (11) de l'unité de support (1) hors du réceptacle (2), pour émettre un signal d'avertissement, il étant notamment prévu que le nombre d'étages (11) de l'unité de support (1) étant enregistré dans l'unité de commande.

4. Dispositif de distribution unitaire (100) selon la revendication 2 ou 3, **caractérisé en ce que** l'unité de commande est conçue pour, après le transport du dernier étage (11) de l'unité de support (1) hors du réceptacle (2), de commander le dispositif de transport (5) afin de ramener l'unité de support (1) dans sa position initiale dans le réceptacle (2) et de désaccoupler l'unité de support (1), étant notamment prévu que le nombre d'étages (11) de l'unité de support (1) soit enregistré dans l'unité de commande.

5. Dispositif de distribution unitaire (100) selon l'une des revendications précédentes, **caractérisé en ce que** le réceptacle (2) est disposé sur un plan incliné (3) orienté selon un angle, notamment compris entre 5 et 45 degrés, par rapport à l'horizontale, et **en ce que** le plan des différents supports de produits (12) de l'unité de support (1), lorsqu'ils sont guidés dans le réceptacle (2), est orienté sensiblement selon le même angle par rapport à l'horizontale.

6. Dispositif de distribution unitaire (100) selon la revendication 5, **caractérisé en ce que** le dispositif d'éjection (6) est réglable linéairement dans un plan orienté sensiblement selon le même angle par rapport à l'horizontale que le plan incliné (3).

7. Dispositif de distribution unitaire (100) selon l'une des revendications 5 ou 6, **caractérisé en ce que**,
que le dispositif de séparation (100) comprend au moins une autre unité de support (1a) et au moins un autre réceptacle (2a) destiné à recevoir et à guider ladite autre unité de support (1a), ledit autre réceptacle (2a) étant disposé sur le plan incliné (3),
il est notamment prévu que le dispositif de séparation (100) comprenne un dispositif de retrait (4) conçu pour, après le retour de l'unité de support (1) à sa position initiale, retirer, notamment éjecter, l'unité de support (1) et le réceptacle (2) du plan incliné (3), il est de préférence prévu que l'unité de commande soit conçue pour commander le dispositif de retrait (4) en vue du retrait, notamment de l'éjection, de l'unité de support (1) et du réceptacle (2).

8. Dispositif de distribution unitaire (100) selon la revendication 7, **caractérisé en ce que** l'unité de commande est conçue pour commander le dispositif de transport (5) de manière à accoupler l'unité de support suivante (1a) après le retrait de l'unité de support (1) et du réceptacle (2) du plan incliné (3).

9. Dispositif de distribution unitaire (100) selon l'une des revendications précédentes, **caractérisé en ce que** le réceptacle (2) présente un bord supérieur (23) et **en ce que** le dispositif de séparation (100) comprend une plate-forme (71) guidée vers le bord supérieur (23) du réceptacle (2), les produits alimentaires (10) posés sur les supports de produits (12) pouvant être transférés un par un de l'unité de support (1) vers la plate-forme (71) par le dispositif d'éjection (6)
et où il est notamment prévu que la plate-forme (71)
- soit orientée selon le même angle par rapport à l'horizontale que le plan incliné (3), ou
- soit orientée horizontalement.

10. Dispositif de distribution unitaire (100) selon l'une des revendications précédentes, **caractérisé en ce que** l'unité de support (1), en particulier chacun des supports de produits (12) de l'unité de support (1), présente une section transversale essentiellement circulaire, et **en ce que** le réceptacle (2) est réalisé sous la forme d'un cylindre creux ouvert à une extrémité.

11. Dispositif de distribution unitaire (100) selon l'une des revendications précédentes, **caractérisé en ce que** le réceptacle (2) comporte un fond (21) et **en ce que** l'unité de support (1) comporte un dispositif de fixation (13), notamment un crochet ou un étrier, sur son côté opposé au fond (21) du réceptacle (2), pour l'accouplement avec le dispositif de transport (5).

12. Dispositif de distribution unitaire (100) selon l'une des revendications précédentes, **caractérisé en ce que** le réceptacle (2) comporte un fond (21) et **en ce que** le fond (21) du réceptacle (2) comporte un dispositif de fixation, en particulier un crochet ou un étrier, destiné à l'accouplement avec le dispositif de transport (5), et **en ce que** le dispositif de transport (5) est conçu pour, par le déplacement du fond (21) du réceptacle (2), transporter l'unité de support (1) ) de manière linéaire et par étapes hors du réceptacle (2) depuis du sa position initiale.

13. Dispositif de distribution unitaire (100) selon l'une des revendications précédentes, **caractérisé en ce qu'**un étage de l'unité de support (1) est délimité par deux supports de produit (12) respectifs, étant notamment prévu que la distance entre deux supports de produit (12) respectifs corresponde sensiblement à la hauteur du produit alimentaire (10) à déposer.

14. Dispositif de distribution unitaire (100) selon l'une des revendications précédentes, **caractérisé en ce que** le dispositif de séparation (100) comprend au moins une autre unité de support (1a) et au moins un autre réceptacle (2a) destiné à recevoir et à guider ladite autre unité de support (1a), et
**en ce que** le dispositif de séparation (100) comprend un dispositif de retrait (4) conçu pour
- après le retour de l'unité de support (1) à sa position initiale, retirer l'unité de support (1) et le réceptacle (2) du dispositif de séparation (100), notamment en les éjectant, et
- transporter le réceptacle supplémentaire (2a) avec l'unité de support supplémentaire (1a), notamment au moyen d'un piston et/ou d'un guide-chaîne, à la place du réceptacle (2) précédemment retiré, notamment éjecté,
il est de préférence prévu que l'unité de commande soit conçue pour commander le dispositif de retrait (4) en vue du prélèvement, notamment de l'éjection, de l'unité de support (1) et du réceptacle (2) et/ou du transport ultérieur de l'autre réceptacle (2a) avec l'autre unité de support (1a).

15. Procédé de distribution unitaire d'un produit alimentaire en forme de disque (10) à l'aide d'un dispositif de séparation (100), selon l'une des revendications 1 à 14
- dans lequel une unité de support (1) remplie de produits alimentaires (10) est placée dans sa position initiale dans le réceptacle (2),
- le dispositif de transport étant couplé à l'unité de support (1) et/ou au réceptacle (2),
- l'unité de support (1) étant transportée de manière linéaire et par étapes par le dispositif de transport (5) depuis sa position initiale hors du réceptacle (2), de sorte qu'un étage (11) de l'unité de support (1) soit transporté par étapes hors du réceptacle (2),
- le dispositif d'éjection (6) étant déplacé linéairement par rapport à l'unité de support (1) et parallèlement au plan des supports de produits (12), depuis sa position de base
- dans laquelle le dispositif d'éjection (6) se trouve à l'extérieur de l'unité de support (1) - vers sa position d'éjection, dans laquelle le dispositif d'éjection (6) est au moins partiellement inséré, à l'extérieur et/ou à l'intérieur du réceptacle (2), entre les supports de produits (12) de l'unité de support (1), et de telle sorte que le produit alimentaire (10) placé sur le support de produit (12) de l'étage (11) transporté, en particulier en dernier, hors du réceptacle (2), est évacué un à un hors de l'unité de support (1) par le dispositif d'éjection (6),
- le dispositif d'éjection (6) étant alors ramené de la position d'éjection à la position de base, et
- le dispositif de transport (5) acheminant ensuite, à la suite du déplacement du dispositif d'éjection (6) vers la position de base, un nouvel étage (11) de l'unité de support (1) depuis le réceptacle (2).

16. Installation pour la préparation de produits alimentaires assemblés, **caractérisée en ce que** l'installation comprend un dispositif de distribution unitaire (100) selon l'une des revendications 1 à 14.

17. Installation selon la revendication 16, **caractérisée en ce que** le dispositif de distribution unitaire (100) est conçu de manière modulaire et peut être extractible et/ou remplacé hors de l'installation.
